# EUROPEAN PATENT APPLICATION

(11) **EP 3 858 881 A1**
(43) Date of publication of application: **04.08.2021**
(21) Application number: 19866754.5
(22) Date of filing: 27.09.2019
(51) Int. Cl.: C08F 297/02, C09K 3/18

(54) **NON-FLUORINATED BLOCK COPOLYMER**

(30) Priority: 28.09.2018 JP 2018185450; 22.02.2019 JP 2019030557
(71) Applicant: DAIKIN INDUSTRIES, LTD., Osaka 530-8323 (JP)
(72) Inventor: SHIOTANI, Yuko, Osaka-shi, Osaka 530-8323 (JP); YOSHIDA, Tomohiro, Osaka-shi, Osaka 530-8323 (JP); KAWABE, Takuma, Osaka-shi, Osaka 530-8323 (JP); YAMAMOTO, Ikuo, Osaka-shi, Osaka 530-8323 (JP)
(74) Representative: Hoffmann Eitle
(86) International application number: PCT/JP2019/038215
(87) International publication number: WO 2020/067448

(57) **Abstract**

Provided is a non-fluorinated block copolymer comprising at least one block segment (A), wherein the block segment (A) comprises a repeating unit formed from one or more types of acrylic monomer having a long-chain hydrocarbon group containing 7-40 carbon atoms, and the block copolymer imparts superior liquid repellency to a base material such as fibers. The non-fluorinated block copolymer preferably contains a segment (B) constituted by at least one of: (B1) a block segment comprising a repeating unit, different from that of segment (A), that is formed from an acrylic monomer having a long-chain hydrocarbon group comprising 7-40 carbon atoms; (B2) a block segment comprising a repeating unit formed from an acrylic monomer not having a long-chain hydrocarbon group; and (B3) a random segment formed from at least two types of acrylic monomers.

## Description

### Technical Field

The present disclosure relates to a fluorine-free block copolymer containing no fluorine atom.

### Background Art

Fluorine-containing water- and oil-repellent agents obtained by containing a fluorine compound have been conventionally known. Such a water- and oil-repellent agent exhibits good water- and oil-repellency when substrates such as textile products are treated with the water- and oil-repellent agent.

Additionally, fluorine-containing block polymers are known to improve liquid repellency.

Meanwhile, acrylic block copolymers containing no fluorine have been reported. However, most of such reports deal with a block copolymer having a block of a hydrophilic monomer, and there is found no description of improvement in liquid repellency by such a block copolymer.

Patent Literature 1 (JP 2004-124088 A) discloses a block copolymer having a hydrophilic polymer component (e.g., poly(ethylene oxide)) and a hydrophobic polymer component (e.g., poly(methacrylate) having a mesogenic side group or long alkyl side chain).

### Citation List

### Patent Literature

Patent Literature 1 JP 2004-124088 A

### Summary of Invention

### Technical Problem

It is an object of the present disclosure to provide a fluorine-free block copolymer that provides excellent liquid repellency.

### Solution to Problem

The present disclosure provides
a fluorine-free block copolymer comprising (A) at least one block segment,
wherein the block segment (A) has a repeating unit formed from an acrylic monomer having a long-chain hydrocarbon group having 7 to 40 carbon atoms.

The present disclosure also provides a method for producing a fluorine-free block copolymer, which comprises:
a first polymerization step of polymerizing one of an acrylic monomer having a long-chain hydrocarbon group or an acrylic monomer free from long-chain hydrocarbon group in a first stage, and then,
a second polymerization step of polymerizing the other of the acrylic monomer having a long-chain hydrocarbon group or the acrylic monomer free from long-chain hydrocarbon group in a second stage, to produce the fluorine-free block copolymer.

The present disclosure further provides
a surface treatment agent comprising:
(1) the fluorine-free block copolymer, and
(2) a liquid medium which is an organic solvent, water, or a mixture of water and an organic solvent.

Preferred embodiments of the present disclosure are as follows.
[1] A fluorine-free block copolymer comprising (A) at least one block segment,
   wherein the block segment (A) has a repeating unit formed from one or at least two acrylic monomers having a long-chain hydrocarbon group having 7 to 40 carbon atoms.
[2] The fluorine-free block copolymer according to [1], wherein
   the fluorine-free block copolymer has a segment (B) different from the block segment (A), the segment (B) having at least one of:
   (B1) a block segment having a repeating unit formed from an acrylic monomer having a long-chain hydrocarbon group having 7 to 40 carbon atoms different from that of the segment (A);
   (B2) a block segment having a repeating unit formed from an acrylic monomer free from long-chain hydrocarbon group; and
   (B3) a random segment formed from at least two acrylic monomers.
[3] The fluorine-free block copolymer according to [1] or [2], wherein
   the acrylic monomer having a long-chain hydrocarbon group is a monomer represented by the formula:

   CH₂=C(-R¹²)-C(=O)-Y¹¹-(R¹¹)ₖ

   wherein R¹¹ is a hydrocarbon group having 7 to 40 carbon atoms,
   R¹² is a hydrogen atom, a monovalent organic group, or a halogen atom exclusive of a fluorine atom,
   Y¹¹ is a group comprised of at least one selected from a divalent to tetravalent hydrocarbon group having 1 carbon atom, -C₆H₄-, -O-, -C(=O)-, -S(=O)₂-, and -NH-(excluding a hydrocarbon group alone), and
   k is 1 to 3.
[4] The fluorine-free block copolymer according to [3], wherein
   in the acrylic monomer having a long-chain hydrocarbon group,
   Y¹¹ is -Y'-, -Y'-Y'-, -Y'-C(=O)-, -C(=O)-Y'-, -Y'-C(=O)-Y'-, -Y'-R'-, -Y'-R'-Y'-, -Y'-R'-Y'-C(=O)-, -Y'-R'-C(=O)-Y'-, -Y'-R'-Y'-C(=O)-Y'-, or -Y'-R'-Y'-R'-
   wherein each Y' is independently a direct bond, -O-, -NH- or -S(=O)₂-, and
   each R' is independently -(CH₂)ₘ-, where m is an integer of 1 to 5, a linear hydrocarbon group having 1 to 5 carbon atoms having an unsaturated bond, a hydrocarbon group having 1 to 5 carbon atoms having a branched structure, or -(CH₂)₁-C₆H₄-(CH₂)₁-, where each 1 is independently an integer of 0 to 5, and -C₆H₄- is a phenylene group.
[5] The fluorine-free block copolymer according to [3] wherein Y¹¹ is -O-, -NH-, -O-C(=O)-, -NH-C(=O)-, -O-C(=O)-NH-, -NH-C(=O)-O-, -NH-C(=O)-NH-, -O-C₆H₄-, -NH-C₆H₄-, -O-(CH₂)ₘ-O-, -NH-(CH₂)ₘ-NH-, -O-(CH₂)ₘ-NH-, -NH-(CH₂)ₘ-O-, -O-(CH₂)ₘ-O-C(=O)-, -O-(CH₂)ₘ-C(=O)-O-, -NH-(CH₂)ₘ-O-C(=O)-, -NH-(CH₂)ₘ-C(=O)-O-, -O-(CH₂)ₘ-O-C(=O)-NH-, -O-(CH₂)ₘ-NH-C(=O)-O-, -O-(CH₂)ₘ-C(=O)-NH-, -O-(CH₂)ₘ-NH-C(=O)-, -O-(CH₂)ₘ-NH-C(=O)-NH-, -O-(CH₂)m-O-C₆H₄-, -O-(CH₂)ₘ-NH-S(=O)₂-, -O-(CH₂)ₘ-S(=O)₂-NH-, -NH-(CH₂)ₘ-O-C(=O)-NH-, -NH-(CH₂)ₘ-NH-C(=O)-O-, -NH-(CH₂)ₘ-C(=O)-NH-,-NH- (CH₂)ₘ-NH-C (=O) -, -NH-(CH₂)ₘ-NH-C(=O)-NH-, -NH- (CH₂)m-O-C₆H₄-, -NH- (CH₂)ₘ-NH-C₆H₄-, -NH- (CH₂) ₘ-NH-S (=O)₂-, or -NH-(CH₂)ₘ-S(=O)₂-NH-, wherein m is an integer of 1 to 5.
[6] The fluorine-free block copolymer according to any one of [1] to [5] , wherein
   the acrylic monomer having a long-chain hydrocarbon group is at least one monomer selected from the group consisting of:
   (a1) a compound represented by the formula:

      CH₂=C (-R²²) -C (=O) -Y²¹-R²¹

      wherein R²¹ is a hydrocarbon group having 7 to 40 carbon atoms,
      R²² is a hydrogen atom, a monovalent organic group, or a halogen atom exclusive of a fluorine atom, and
      Y²¹ is -O- or -NH-, and
   (a2) a compound represented by the formula:

      CH₂=C (-R³²) -C (=O) -Y³¹-Z³¹ (-Y³²-R³¹)ₙ

      wherein R³¹ is a hydrocarbon group having 7 to 40 carbon atoms,
      R³² is a hydrogen atom, a monovalent organic group, or a halogen atom exclusive of a fluorine atom,
      Y³¹ is -O- or -NH-,
      each Y³² is independently a group comprised of at least one selected from a direct bond, -C₆H₄-, -O-, - C(=O)-, -S(=O)₂- , and -NH-,
      Z³¹ is a divalent or trivalent hydrocarbon group having 1 to 5 carbon atoms, and
      n is 1 or 2.
[7] The fluorine-free block copolymer according to [6], wherein
   in the acrylic monomer (a1),
   R²² is a hydrogen atom, a methyl group, or a chlorine atom, and
   in the acrylic monomer (a2),
   R³² is a hydrogen atom, a methyl group, or a chlorine atom, and
   Y³² is a direct bond, -O-, -NH-, -O-C(=O)-, -C(=O)-O-, -C(=O)-NH-, -NH-C(=O)-, -NH-S(=O)₂-, -S(=O)₂-NH-, -O-C(=O)-NH-, -NH-C(=O)-O-, -NH-C(=O)-NH-, -O-C₆H₄-, -NH-C₆H₄-,-O-(CH₂)ₘ-O-, -NH-(CH₂)ₘ-NH-, -O-(CH₂)ₘ-NH-, -NH-(CH₂)ₘ-O-, -O-(CH₂)ₘ-O-C(=O)-, -O-(CH₂)ₘ-C(=O)-O-, -NH-(CH₂)ₘ-O-C(=O)-, -NH-(CH₂)ₘ-C(=O)-O-, -O-(CH₂)ₘ-O-C(=O)-NH-, -O-(CH₂)ₘ-NH-C(=O)-O-, -O-(CH₂)ₘ-C(=O)-NH-, -O-(CH₂)ₘ-NH-C(=O)-, -O-(CH₂)ₘ-NH-C(=O)-NH-, -O-(CH₂)m-O-C₆H₄-, -NH-(CH₂)ₘ-O-C(=O)-NH-, -NH-(CH₂)ₘ-NH-C(=O)-O-, -NH-(CH₂)ₘ-C(=O)-NH-, -NH-(CH₂) ₘ-NH-C(=O)-, -NH-(CH₂)ₘ-NH-C(=O)-NH-, -NH-(CH₂)ₘ-O-C₆H₄- or - (CH₂)ₘ-NH-C₆H₄-
   where m is an integer of 1 to 5, and
   Z³¹ is -CH₂-, -CH₂CH₂-, -CH₂CH₂CH₂-, -CH₂CH₂CH₂CH₂-, - CH₂CH₂CH₂CH₂CH₂-, -CH₂CH= having a branched structure, - CH₂(CH-)CH₂- having a branched structure, -CH₂CH₂CH= having a branched structure, -CH₂CH₂CH₂CH₂CH= having a branched structure, -CH₂CH₂(CH-)CH₂- having a branched structure, or -CH₂CH₂CH₂CH= having a branched structure.
[8] The fluorine-free block copolymer according to any one of [1] to [7], wherein, in the acrylic monomer having a long-chain hydrocarbon group, the long-chain hydrocarbon group is a linear or branched alkyl group having 10 to 40 carbon atoms.
[9] The fluorine-free block copolymer according to any one of [1] to [8], wherein the acrylic monomer free from long-chain hydrocarbon group is an acrylic monomer having a short-chain hydrocarbon group having 1 to 6 carbon atoms, an acrylic monomer having a dimethylsiloxane portion in a side chain, an acrylic monomer having a hydrophilic group, an acrylic monomer having a cyclic hydrocarbon group, an acrylic monomer having a crosslinking portion, or a halogenated olefin, and the hydrophilic group is an OH group, an NH₂ group, a COOH group, a sulfone group or a phosphoric acid group, or an alkali metal or alkaline earth metal salt group of a carboxylic acid.
[10] The fluorine-free block copolymer according to [9], wherein,
   the acrylic monomer having a short-chain hydrocarbon group having 1 to 6 carbon atoms is a compound represented by the formula:

   CH₂=C (-R⁵²) -C (=O) -Y⁵¹-R⁵¹

   wherein R⁵¹ is a hydrocarbon group having 1 to 6 carbon atoms, optionally comprising an oxygen atom,
   R⁵² is a hydrogen atom, a monovalent organic group, or a halogen atom exclusive of a fluorine atom, and
   Y⁵¹ is -O- or -NH-, and
   the acrylic monomer having a hydrophilic group is a compound represented by the formula:

   CH₂=C(-R⁶²)-C(=O)-Y⁶¹-R⁶¹-(-Y⁶²)_{q}

   wherein R⁶¹ is a hydrocarbon group having 1 to 6 carbon atoms or a single bond (direct bond),
   R⁶² is a hydrogen atom, a monovalent organic group, or a halogen atom exclusive of a fluorine atom,
   Y⁶¹ is -O- or -NH-,
   Y⁶² is a hydrophilic group, and
   q is a number of 1 to 3.
[11] The fluorine-free block copolymer according to any one of [1] to [10], wherein a molar ratio of the block segment (A) (molar ratio of the repeating unit) is 30 mol% or more, based on the repeating units of the copolymer.
[12] A method for producing the fluorine-free block copolymer according to any one of [1] to [11] , which comprises:
   a first polymerization step of polymerizing one of an acrylic monomer having a long-chain hydrocarbon group or an acrylic monomer free from long-chain hydrocarbon group in a first stage, and then,
   a second polymerization step of polymerizing the other of the acrylic monomer having a long-chain hydrocarbon group or the acrylic monomer free from long-chain hydrocarbon group in a second stage, to produce the fluorine-free block copolymer.
[13] A surface treatment agent comprising:
   (1) the fluorine-free block copolymer according to any one of [1] to [11] , and
   (2) a liquid medium which is an organic solvent, water, or a mixture of water and an organic solvent.
[14] The surface treatment agent according to [13], being a water-repellent agent.
[15] A substrate comprising the fluorine-free block copolymer in the surface treatment agent according to [13] or [14] adhering to the substrate.
[16] A method for producing a treated substrate, comprising applying the surface treatment agent according to [13] or [14] to the substrate.

### Advantageous Effect of Invention

The block copolymer of the present disclosure is excellent in liquid repellency, that is, water-repellency and oil-repellency, particularly water-repellency. The block copolymer has high crystallinity and has a melting point of 25°C or more. The block copolymer has good film-forming property.

The block copolymer exhibits better performance, for example, liquid repellency, than that of a random copolymer formed from the same monomer.

### Description of Embodiment

### (1) Fluorine-free block Copolymer

The block copolymer of the present disclosure has a block segment (A) and other segment (B). The block copolymer is a fluorine-free block copolymer having no fluorine atom.

A copolymer having the block segment (A) herein is referred to as a "block copolymer". "Fluorine-free" herein means "containing no fluorine atom".

### (A) Block Segment

The block segment (A) has repeating units formed from an acrylic monomer (a) having a long-chain hydrocarbon group having 7 to 40 carbon atoms. The block segment (A) preferably comprises repeating units formed from one acrylic monomer having a long-chain hydrocarbon group having 7 to 40 carbon atoms, but the block segment (A) may have repeating units formed from two or more (e.g., two or three) acrylic monomers each having a long-chain hydrocarbon group having 7 to 40 carbon atoms. The block segment (A) is preferably formed from one acrylic monomer having a long-chain hydrocarbon group having 7 to 40 carbon atoms. The long-chain hydrocarbon group having 7 to 40 carbon atoms is preferably a linear or branched hydrocarbon group having 7 to 40 carbon atoms. Preferably, the long-chain hydrocarbon group has 10 to 40, for example, 12 to 30, particularly 16 to 26 carbon atoms. The long-chain hydrocarbon group is particularly preferably a stearyl group, an icosyl group, or a behenyl group.

### (a) Acrylic Monomer

Preferably, the acrylic monomer having a long-chain hydrocarbon group is a monomer represented by the formula:

CH₂=C(-R¹²)-C(=O)-Y¹¹-(R¹¹)ₖ

wherein each R¹¹ is independently a hydrocarbon group having 7 to 40 carbon atoms,
R¹² is a hydrogen atom, a monovalent organic group, or a halogen atom exclusive of a fluorine atom,
Y¹¹ is a group comprised of at least one selected from a divalent to tetravalent hydrocarbon group having 1 carbon atom (particularly, -CH₂-, -CH=, and -C≡), -C₆H₄-, -O-, -C(=O)-, -S(=O)₂-, and -NH- (excluding a hydrocarbon group alone), and
k is 1 to 3.

k is 1, 2, or 3. k is 3, for example, when Y¹¹ has a tetravalent hydrocarbon group having 1 carbon atom and the like. k is 2 , for example, when Y¹¹ has a trivalent hydrocarbon group having 1 carbon atom and the like. k is 1 when Y¹¹ has neither trivalent nor tetravalent hydrocarbon group having 1 carbon atom (e.g., when Y¹¹ has a (e.g., 1 to 6) divalent hydrocarbon group having 1 carbon atom (-CH₂-)).

R¹² may be a hydrogen atom, a methyl group, a halogen atom exclusive of a fluorine atom, a substituted or unsubstituted benzyl group, or a substituted or unsubstituted phenyl group. Examples of R¹² include a hydrogen atom, a methyl group, a chlorine atom, a bromine atom, an iodine atom, and a cyano group. When the main chain of the polymer to be obtained is less rigid, the crystallinity of the side chain is unlikely to be inhibited. Thus, R¹² is preferably a hydrogen atom, a methyl group, or a chlorine atom, preferably a hydrogen atom or a methyl group, more preferably a hydrogen atom.

Y¹¹ is preferably a divalent group. Examples of the divalent to tetravalent hydrocarbon group having 1 carbon atom include -CH₂-, -CH= having a branched structure, and -C≡ having a branched structure.

Y¹¹ may be -Y'-, -Y'-Y'-, -Y'-C(=O)-, -C(=O)-Y'-, - Y¹-C(=O)-Y' -, -Y'-R'-, -Y'-R'-Y'-, -Y'-R'-Y'-C(=O)-, -Y'-R'-C(=O)-Y'-, -Y'-R'-Y'-C(=O)-Y'-, or -Y'-R'-Y'-R'-
wherein each Y' is independently a direct bond, -O-, -NH-, or -S(=O)₂-, and
R' is -(CH₂)ₘ-, where m is an integer of 1 to 5, a linear hydrocarbon group having 1 to 5 carbon atoms having an unsaturated bond, a hydrocarbon group having 1 to 5 carbon atoms having a branched structure, or - (CH₂)₁-C₆H₄-(CH₂)₁-, where each 1 is independently an integer of 0 to 5, and -C₆H₄- is a phenylene group.

Specific examples of Y¹¹ include -O-, -NH-, -O-C(=O)-, -NH-C(=O)-, -O-C(=O)-NH-, -NH-C(=O)-O-, -NH-C(=O)-NH-, -O-C₆H₄-, -NH-C₆H₄-, -O-(CH₂)ₘ-O-, -NH-(CH₂)ₘ-NH-, -O-(CH₂)ₘ-NH-, -NH-(CH₂)ₘ-O-, -O-(CH₂)ₘ-O-C(=O)-, -O-(CH₂)ₘ-C(=O)-O-, -NH-(CH₂)ₘ-O-C(=O)-, -NH-(CH₂)ₘ-C(=O)-O-, -O-(CH₂)ₘ-O-C(=O)-NH-, -O- (CH₂)ₘ-NH-C(=O)-O-, -O-(CH₂)ₘ-C(=O)-NH-, -O-(CH₂)ₘ-NH-C(=O)-, -O-(CH₂)ₘ-NH-C(=O)-NH-,-O-(CH₂)ₘ-O-C₆H₄-, -O-(CH₂)ₘ-NH-S(=O)₂-, -O-(CH₂)ₘ-S(=O)₂-NH-,-NH-(CH₂)ₘ-O-C(=O)-NH-, -NH-(CH₂)ₘ-NH-C(=O)-O-, -NH-(CH₂)ₘ-C(=O)-NH-, -NH-(CH₂)ₘ-NH-C(=O)-, -NH-(CH₂)ₘ-NH-C(=O)-NH-,-NH-(CH₂)ₘ-O-C₆H₄-, -NH-(CH₂)ₘ-NH-C₆H₄-, -NH-(CH₂)ₘ-NH-S(=O)₂-, or -NH-(CH₂)ₘ-S(=O)₂-NH-, wherein m is an integer of 1 to 5, particularly 2 or 4.

Y¹¹ is preferably -O-, -NH-, -O- (CH₂) ₘ-O-C(=O) -, -O-(CH₂)ₘ-NH-C(=O)-, -O-(CH₂)ₘ-O-C(=O)-NH-, -O-(CH₂)ₘ-NH-C(=O)-O-, -O-(CH₂)ₘ-NH-C(=O)-NH-, -O-(CH₂)ₘ-NH-S(=O)₂-,-O-(CH₂)ₘ-S(=O)₂-NH-, -NH-(CH₂)ₘ-O-C(=O)-, -NH-(CH₂)ₘ-NH-C(=O)-, -NH-(CH₂)ₘ-O-C(=O)-NH-, -NH-(CH₂)ₘ-NH-C(=O)-O-,-NH-(CH₂)ₘ-NH-C(=O)-NH-, -NH-(CH₂)ₘ-NH-S(=O)₂-, or -NH-(CH₂)ₘ-S(=O)₂-NH-
wherein m is an integer of 1 to 5, particularly 2 or 4 .

Y¹¹ is more preferably -O-, -O-(CH₂)ₘ-O-C(=O)-NH-,-O-(CH₂)ₘ-NH-C(=O)-O-, -O-(CH₂)ₘ-NH-C(=O)-, -O-(CH₂)ₘ-NH-S(=O)₂- or -O-(CH₂)ₘ-S(=O)₂-NH-, particularly -O-(CH₂)ₘ-NH-C(=O)- .

R¹¹ is preferably a linear or branched hydrocarbon group. The hydrocarbon group may be particularly a linear hydrocarbon group. Preferably, the hydrocarbon group is an aliphatic hydrocarbon group, particularly a saturated aliphatic hydrocarbon group, especially an alkyl group. When the hydrocarbon group is short, crystallinity between side groups decreases, and further, water-repellent performance also decreases. When the hydrocarbon group is excessively long, the melting point of the monomer having the corresponding hydrocarbon group increases, and problems such as decrease in the solubility of the monomer and unstable emulsification may occur during polymerization. Accordingly, the hydrocarbon group has preferably 12 to 30, for example, 16 to 26, and particularly 18 to 22 carbon atoms.

Examples of the acrylic monomer having a long-chain hydrocarbon group include:
(a1) an acrylic monomer represented by the formula:

   CH₂=C(-R²²)-C(=O)-Y²¹-R²¹

   wherein R²¹ is a hydrocarbon group having 7 to 40 carbon atoms,
   R²² is a hydrogen atom, a monovalent organic group, or a halogen atom exclusive of a fluorine atom, and
   Y²¹ is -O- or -NH-, and
(a2) an acrylic monomer represented by the formula:

   CH₂=C(-R³²)-C(=O)-Y³¹-Z³¹(-Y³²-R³¹)ₙ

   wherein each R³¹ is independently a hydrocarbon group having 7 to 40 carbon atoms,
   R³² is a hydrogen atom, a monovalent organic group, or a halogen atom exclusive of a fluorine atom, and
   Y³¹ is -O- or -NH-,
   each Y³² is independently a group comprised of at least one selected from a direct bond, -O-, -C(=O)-, - S(=O)₂-, or -NH-,
   Z³¹ is a direct bond or a divalent or trivalent hydrocarbon group having 1 to 5 carbon atoms, and
   n is 1 or 2.

### (a1) Acrylic Monomer

The acrylic monomer (a1) is a compound represented by the formula:

CH₂=C(-R²²)-C(=O)-Y²¹-R²¹

wherein R²¹ is a hydrocarbon group having 7 to 40 carbon atoms,
R²² is a hydrogen atom, a monovalent organic group, or a halogen atom exclusive of a fluorine atom, and
Y²¹ is -O- or -NH-.

The acrylic monomer (a1) is a long-chain acrylate ester monomer in which Y²¹ is -O- or a long-chain acrylamide monomer in which Y²¹ is -NH-.

R²¹ is preferably a linear or branched hydrocarbon group. The hydrocarbon group may be particularly a linear hydrocarbon group. Preferably, the hydrocarbon group is an aliphatic hydrocarbon group, particularly a saturated aliphatic hydrocarbon group, and especially an alkyl group. When the hydrocarbon group is short, crystallinity between side groups decreases, and further, water-repellent performance also decreases. When the hydrocarbon group is excessively long, the melting point of the monomer having the corresponding hydrocarbon group increases, and problems such as decrease in the solubility of the monomer and unstable emulsification may occur during polymerization. Accordingly, the hydrocarbon group has preferably 12 to 30 or 16 to 26 carbon atoms, and particularly 18 to 22 carbon atoms.

R²² may be a hydrogen atom, a methyl group, a halogen atom exclusive of a fluorine atom, a substituted or unsubstituted benzyl group, or a substituted or unsubstituted phenyl group. Examples of R²² include hydrogen, a methyl group, Cl, Br, I, and CN. When the main chain of the polymer to be obtained is less rigid, the crystallinity of a side chain is unlikely to be inhibited. Thus, R²² is preferably hydrogen, a methyl group, or Cl, preferably hydrogen or a methyl group, more preferably hydrogen.

Preferable specific examples of the long-chain acrylate ester monomer include stearyl (meth)acrylate, icosyl (meth)acrylate, behenyl (meth)acrylate, stearyl α-chloroacrylate, icosyl α-chloroacrylate, and behenyl α-chloroacrylate.

Preferable specific examples of the long-chain acrylamide monomer include stearyl (meth)acrylamide, icosyl (meth)acrylamide, and behenyl (meth)acrylamide.

### (a2) Acrylic Monomer

The acrylic monomer (a2) is (meth)acrylate or (meth)acrylamide having a group comprised of at least one selected from -O-, -C(=O)-, -S(=O)₂-, and -NH-.

The acrylic monomer (a2) may be a compound represented by the formula:

CH₂=C(-R³²)-C(=O)-Y³¹-Z³¹(-Y³²-R³¹)ₙ

wherein each R³¹ is independently a hydrocarbon group having 7 to 40 carbon atoms,
R³² is a hydrogen atom, a monovalent organic group, or a halogen atom exclusive of a fluorine atom, and
Y³¹ is -O- or -NH-,
each Y³² is independently a direct bond, a group comprised of at least one selected from -O-, -C(=O)-, - S(=O)₂-, and -NH-,
Z³¹ is a direct bond or a divalent or trivalent hydrocarbon group having 1 to 5 carbon atoms, and
n is 1 or 2.

R³¹ is preferably a linear or branched hydrocarbon group. The hydrocarbon group may be particularly a linear hydrocarbon group. Preferably, the hydrocarbon group is an aliphatic hydrocarbon group, particularly a saturated aliphatic hydrocarbon group, and especially an alkyl group. When the hydrocarbon group is short, crystallinity between side groups decreases, and further, water-repellent performance also decreases. When the hydrocarbon group is excessively long, the melting point of the monomer having the corresponding hydrocarbon group increases, and problems such as decrease in the solubility of the monomer and unstable emulsification may occur during polymerization. Accordingly, the hydrocarbon group has preferably 12 to 30 or 16 to 26 carbon atoms, particularly 18 to 22 carbon atoms.

R³² may be a hydrogen atom, a methyl group, a halogen atom exclusive of a fluorine atom, a substituted or unsubstituted benzyl group, or a substituted or unsubstituted phenyl group. Examples of R³² include hydrogen, a methyl group, Cl, Br, I, and CN. When the main chain of the polymer to be obtained is less rigid, the crystallinity of a side chain is unlikely to be inhibited. Thus, R³² is preferably hydrogen, a methyl group, or Cl, preferably hydrogen or a methyl group, more preferably hydrogen.

Y³² may be -Y'-, -Y'-Y'-, -Y'-C(=O)-, -C(=O)-Y'-,-Y'-C(=O)-Y'-, -Y'-R'-, -Y'-R'-Y'-, -Y'-R'-Y'-C(=O)-, -Y'-R¹-C(=O)-Y'-, -Y'-R'-Y'-C(=O)-Y'-, or -Y'-R'-Y'-R'-
wherein each Y' is independently a direct bond, -O-, -NH-, or -S(=O)₂- ,
R' is -(CH₂)ₘ-, where m is an integer of 1 to 5, a linear hydrocarbon group having 1 to 5 carbon atoms having an unsaturated bond, a hydrocarbon group having 1 to 5 carbon atoms having a branched structure, or -(CH₂)₁ -C₆H₄-(CH₂)₁-, where each 1 is independently an integer of 0 to 5, and -C₆H₄- is a phenylene group.

Specific examples of Y³² include a direct bond, -O-, -NH-, -O-C(=O)-, -C(=O)-O-, -C(=O)-NH-, -NH-C(=O)-, -NH-S(=O)₂-, -S(=O)₂-NH-, -O-C(=O)-NH-, -NH-C(=O)-O-, -NH-C(=O)-NH-, -O-C₆H₄-, -NH-C₆H₄-, -O-(CH₂)ₘ-O-, -NH-(CH₂)ₘ-NH-, -O-(CH₂)ₘ-NH-, -NH⁻ (CH₂)ₘ-O-, -O- (CH₂)ₘ-O-C(=O)-, -O-(CH₂)ₘ-C(=O)-O-, -NH-(CH₂)ₘ-O-C(=O)-, -NH-(CH₂)ₘ-C(=O)-O-, -O-(CH₂)ₘ-O-C(=O)-NH-, -O-(CH₂)ₘ-NH-C(=O)-O-, -O-(CH₂)ₘ-C(=O)-NH-, -O-(CH₂)ₘ-NH-C(=O)-, -O-(CH₂)ₘ-NH-C(=O)-NH-,-O-(CH₂)ₘ-O-C₆H₄-, -NH-(CH₂)ₘ-O-C(=O)-NH-, -NH-(CH₂)ₘ-NH-C(=O)-O-, -NH-(CH₂)ₘ-C(=O)-NH-, -NH-(CH₂)ₘ-NH-C(=O)-, -NH-(CH₂)ₘ-NH-C(=O)-NH-, -NH-(CH₂)ₘ-O-C₆H₄-, and -NH-(CH₂)ₘ-NH-C₆H₄-
wherein m is an integer of 1 to 5.

Y³² is preferably -O-, -NH-, -O-C(=O)-, -C(=O)-O-,-C(=O)-NH-, -NH-C(=O)-, -NH-S(=O)₂-, -S(=O)₂-NH-, -O-C(=O)-NH-, -NH-C(=O)-O-, -NH-C(=O)-NH-, or -O-C₆H₄-.

Z³¹ is a direct bond or a divalent or trivalent hydrocarbon group having 1 to 5 carbon atoms, which may have a linear structure or a branched structure. It is preferred that Z³¹ have 2 to 4, particularly 2 carbon atoms. Specific examples of Z³¹ include a direct bond, - CH₂-, -CH₂CH₂-, -CH₂CH₂CH₂-, -CH₂CH₂CH₂CH₂-, - CH₂CH₂CH₂CH₂CH₂-, -CH₂CH= having a branched structure, - CH₂(CH-)CH₂- having a branched structure, -CH₂CH₂CH= having a branched structure, -CH₂CH₂CH₂CH₂CH= having a branched structure, -CH₂CH₂(CH-)CH₂- having a branched structure, and -CH₂CH₂CH₂CH= having a branched structure.

Z³¹ is preferably not a direct bond, and Y³² and Z³¹ are not a direct bond at the same time.

The acrylic monomer (a2) is preferably CH₂=C(-R³²)-C(=O)-O-(CH₂)ₘ-NH-C(=O)-R³¹, CH₂=C(-R³²)-C(=O)-O-(CH₂)ₘ-O-C(=O)-NH-R³¹, CH₂=C(-R³²)-C(=O)-O-(CH₂)ₘ-NH-C(=O)-O-R³¹, CH₂=C(-R³²)-C(=O)-O-(CH₂)ₘ-NH-C(=O)-NH-R³¹, where R³¹, and R³² are as defined above. The acrylic monomer (a2) is particularly preferably CH₂=C(-R³²)-C(=O)-O-(CH₂)ₘ-NH-C(=O)-R³¹.

The acrylic monomer (a2) can be produced by reacting a hydroxyalkyl (meth)acrylate or a hydroxyalkyl (meth)acrylamide with a long-chain alkyl isocyanate. Examples of the long-chain alkyl isocyanate include lauryl isocyanate, myristyl isocyanate, cetyl isocyanate, stearyl isocyanate, oleyl isocyanate, and behenyl isocyanate.

Alternatively, the acrylic monomer (a2) also can be produced by reacting a (meth)acrylate having an isocyanate group in a side chain, for example, 2-methacryloyloxyethyl methacrylate with a long-chain alkylamine or a long-chain alkyl alcohol. Examples of the long-chain alkylamine include lauryl amine, myristyl amine, cetyl amine, stearyl amine, oleyl amine, and behenyl amine. Examples of the long-chain alkyl alcohol include lauryl alcohol, myristyl alcohol, cetyl alcohol, stearyl alcohol, oleyl alcohol, and behenyl alcohol.

Specific examples of the acrylic monomer (a2) are as follows. Although compounds of the following chemical formulas are acryl compounds having a hydrogen atom at the α-position, specific examples may include methacrylic compounds having a methyl group at the α-position and α-chloracrylic compounds having a chlorine atom at the α-position. 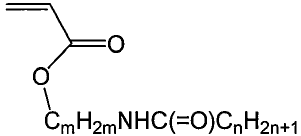 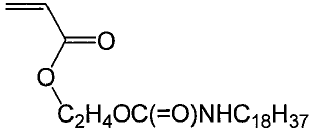 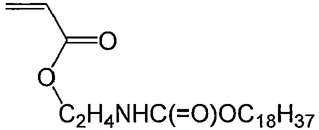 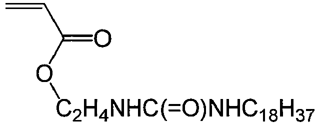 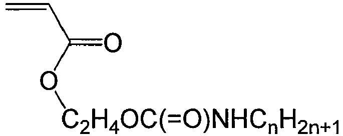 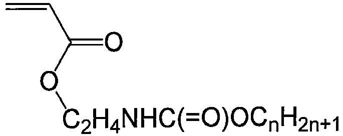 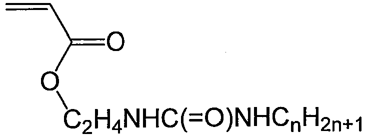 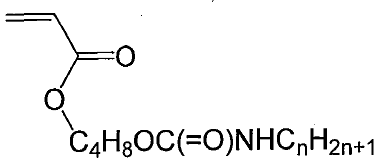 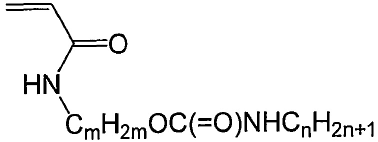 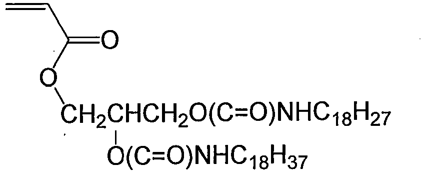 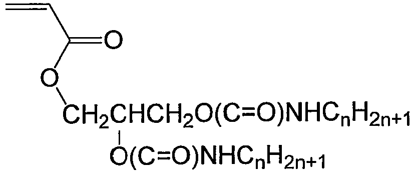 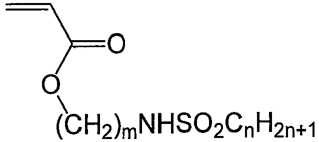 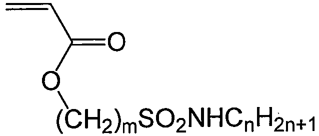 wherein m is an integer of 1 to 5, and n is an integer of 7 to 40.

The acrylic monomer (a) may be one which includes a single type of R³¹ (e.g., only a compound in which R³¹ has 17 carbon atoms) or one in which a plurality of R³¹ are combined (e.g., a mixture of a compound in which R³¹ has 17 carbon atoms and a compound in which R³¹ has 15 carbon atoms).

Among acrylic monomer (a2), examples of an amide group-containing monomer include carboxamide alkyl (meth)acrylates.

Specific examples of the amide group-containing monomer include palmitamidoethyl (meth)acrylate (palmitic acid amidoethyl (meth)acrylate), stearamidoethyl (meth)acrylate (stearic acid amidoethyl (meth)acrylate), behenamidoethyl (meth)acrylate, myristamidoethyl (meth)acrylate, lauramidoethyl (meth)acrylate, ethyl isostearamide (meth)acrylate, ethyl oleamide (meth)acrylate, tertiary-butyl cyclohexyl caproamidoethyl (meth)acrylate, ethyl adamantanecarboxamide (meth)acrylate, naphthalenecarboxamidoethyl (meth)acrylate, anthracenecarboxamidoethyl (meth)acrylate, palmitamidopropyl (meth)acrylate, stearamidopropyl (meth)acrylate, palmitamidoethyl vinyl ether, stearamidoethyl vinyl ether, palmitamidoethyl allyl ether, stearamidoethyl allyl ether, or mixtures thereof.

The amide group-containing monomer is preferably stearamidoethyl (meth)acrylate. The amide group-containing monomer may be a mixture containing stearamidoethyl (meth)acrylate. In the mixture containing stearamidoethyl (meth)acrylate, the amount of stearamidoethyl (meth)acrylate is preferably 55 to 99% by weight, based on the total weight of the amide group-containing monomer. The balance monomer may be, for example, palmitamidoethyl (meth)acrylate.

### (B) Other Segment

The block copolymer has other segment (B) in addition to the block segment (A).

The block copolymer may be an A-B block polymer having one block segment (A) and other segment (B), an A-B-A block polymer having two block segments (A) and other segment (B), or a B-A-B block polymer having one block segment (A) and two other segments (B). The block copolymer may have an additional segment (C) in addition to the block segment (A) and the other segment (B). The block copolymer may be, for example, an A-B-C block copolymer or a B-A-C block polymer.

An example of the segment (B) is at least one segment selected from:
(B1) a block segment having a repeating unit formed from an acrylic monomer having a long-chain hydrocarbon group having 7 to 40 carbon atoms, which is different from the segment (A);
(B2) a block segment having a repeating unit formed from an acrylic monomer free from long-chain hydrocarbon group; and
(B3) a random segment formed from at least two acrylic monomers.

### (B1) Block Segment

The block segment (B1) has repeating units formed from an acrylic monomer having a long-chain hydrocarbon group having 7 to 40 carbon atoms different from the acrylic monomer having a long-chain hydrocarbon group having 7 to 40 carbon atoms which forms the segment (A). That is, the acrylic monomer having a long-chain hydrocarbon group having 7 to 40 carbon atoms which forms the block segment (B1) is different from the acrylic monomer having a long-chain hydrocarbon group having 7 to 40 carbon atoms which forms the block segment (A).

A preferable embodiment of the acrylic monomer having a long-chain hydrocarbon group having 7 to 40 carbon atoms, which forms the block segment (B1) is the same as that of the acrylic monomer having a long-chain hydrocarbon group having 7 to 40 carbon atoms, which forms the block segment (A).

A preferable exemplary combination of the acrylic monomer having a long-chain hydrocarbon group having 7 to 40 carbon atoms which forms the block segment (A) and the acrylic monomer having a long-chain hydrocarbon group having 7 to 40 carbon atoms which forms the block segment (B1) include:
(A) a monomer represented by CH₂=C(-R¹²)-C(=O)-Y¹¹-(R¹¹)ₖ, wherein Y¹¹ is -NH-, -O-(CH₂)ₘ-O-C(=O)-NH-, -O-(CH₂)ₘ-NH-C(=O)-O- or -O-(CH₂)ₘ-NH-C(=O)-, and (B1) a monomer represented by CH₂=C(-R¹²)-C(=O)-Y¹¹-(R¹¹)ₖ, wherein Y¹¹ is -O- (e.g., stearyl acrylate).

### (B2) Block Segment

The block segment (B2) has repeating units formed from an acrylic monomer free from long-chain hydrocarbon group.

Examples of the acrylic monomer free from long-chain hydrocarbon group include an acrylic monomer having a short-chain hydrocarbon group having 1 to 6 carbon atoms, an acrylic monomer having a hydrophilic group, an acrylic monomer having a cyclic hydrocarbon group, and a halogenated olefin. Other examples of the acrylic monomers free from long-chain hydrocarbon group include an acrylic monomer having a dimethylsiloxane portion in a side chain and a divinyl compound typified by a compound having two acrylic groups.

The acrylic monomer is an acrylate ester monomer or an acrylamide monomer.

A preferable example of the acrylic monomer having a short-chain hydrocarbon group having 1 to 6 carbon atoms is a compound represented by the formula:

CH₂=C(-R⁵²)-C(=O)-Y⁵¹-R⁵¹

wherein R⁵¹ is a hydrocarbon group having 1 to 6 carbon atoms, optionally containing an oxygen atom,
R⁵² is a hydrogen atom, a monovalent organic group, or a halogen atom exclusive of a fluorine atom, and
Y⁵¹ is -O- or -NH- .

R⁵¹ is a linear or branched hydrocarbon group. The linear or branched hydrocarbon group has 1 to 6 carbon atoms. The linear or branched hydrocarbon group preferably has 1 to 4 carbon atoms and is generally an aliphatic hydrocarbon group, particularly a saturated aliphatic hydrocarbon group, and especially an alkyl group. The linear or branched hydrocarbon group may also contain an oxygen atom. An example of the hydrocarbon group containing an oxygen atom is a glycidyl group.

R⁵² may be a hydrogen atom, a methyl group, a halogen atom exclusive of a fluorine atom, a substituted or unsubstituted benzyl group, or a substituted or unsubstituted phenyl group. Examples of R⁵² include hydrogen, a methyl group, Cl, Br, I, and CN. When the main chain of the polymer to be obtained is less rigid, the crystallinity of a side chain of the block segment (A) is unlikely to be inhibited. Thus, R⁵² is preferably hydrogen, a methyl group, or Cl, preferably hydrogen or a methyl group, more preferably hydrogen.

Particularly preferable specific examples of the short-chain acrylic monomer include methyl (meth)acrylate, methyl α-chloroacrylate, ethyl (meth)acrylate, ethyl α-chloroacrylate, n-butyl (meth)acrylate, t-butyl (meth)acrylate, n-butyl α-chloroacrylate, t-butyl α-chloroacrylate, methyl (meth)acrylamide, n-butyl (meth)acrylamide, t-butyl (meth)acrylamide, glycidyl (meth)acrylate, and glycidyl (meth)acrylamide.

A preferable example of the acrylic monomer having a hydrophilic group is a compound represented by the formula:

CH₂=C(-R⁶²)-C(=O)-Y⁶¹-(R⁶¹)ₚ(-X⁶¹)_{q}

wherein R⁶¹ is a hydrocarbon group having 1 to 10 carbon atoms,
R⁶² is a hydrogen atom, a monovalent organic group, or a halogen atom exclusive of a fluorine atom, and
Y⁶¹ is -O- or -NH-,
X⁶¹ is a hydrophilic group,
p is 0 or 1, and
q is a number of 1 to 4.

Examples of the hydrophilic group (X⁶¹) include an OH group, an NH₂ group, a COOH group, a sulfone group, or a phosphoric acid group, and an alkali metal or alkaline earth metal salt group of a carboxylic acid. Incorporation of a polar group such as a hydrophilic group is more likely to form a phase separation structure and improves the liquid repellency of a copolymer to be obtained. Adhesion to a substrate such as fabric or glass is improved, and water-repellent performance and durability of water-repellent performance are improved.

R⁶¹ is a linear, branched, or cyclic hydrocarbon group. R⁶¹ may have 1 to 6 carbon atoms.

R⁶² may be a hydrogen atom, a methyl group, a halogen atom exclusive of a fluorine atom, a substituted or unsubstituted benzyl group, or a substituted or unsubstituted phenyl group. Examples of R⁶² include hydrogen, a methyl group, Cl, Br, I, and CN. When the main chain is less rigid, the crystallinity of a side chain of the block segment (A) is unlikely to be inhibited. Thus, R⁶² is preferably hydrogen, a methyl group, or Cl, preferably hydrogen or a methyl group, more preferably hydrogen.

Preferable specific examples of the acrylic monomer having a hydrophilic group include hydroxyethyl (meth)acrylate, hydroxyethyl (meth)acrylamide, (meth)acrylic acid, hydroxypropyl (meth)acrylate, hydroxypropyl (meth)acrylamide, hydroxybutyl (meth)acrylate, hydroxybutyl (meth)acrylamide, carboxyethyl (meth)acrylate, carboxyethyl (meth)acrylamide, carboxypropyl (meth)acrylate, carboxypropyl (meth)acrylamide, carboxybutyl (meth)acrylate, and carboxybutyl (meth)acrylamide.

A preferable example of the cyclic hydrocarbon group-containing acrylate ester monomer is a compound represented by the formula:

CH₂=C(R⁷²)-C(=O)-Y⁷¹-R⁷¹

wherein R⁷¹ is a cyclic hydrocarbon-containing group having 4 to 30 carbon atoms as a hydrocarbon group,
R⁷² is a hydrogen atom, a monovalent organic group, or a halogen atom exclusive of a fluorine atom, and
Y⁷¹ is -O- or -NH-.

The cyclic hydrocarbon group-containing acrylic monomer is preferably a monomer of which homopolymer has a glass transition point which does not inhibit the crystallinity of the block segment (A) (e.g., 25°C or less).

The cyclic hydrocarbon group-containing acrylic monomer is free from fluoroalkyl group.

R⁷¹ is a cyclic hydrocarbon group optionally having a chain group (e.g., linear or branched chain hydrocarbon group). Examples of the cyclic hydrocarbon group include a monocyclic group, a polycyclic group, and a bridged ring group which are saturated or unsaturated. The cyclic hydrocarbon group is preferably saturated. The cyclic hydrocarbon group has 4 to 30, preferably 4 to 20 carbon atoms. Examples of the cyclic hydrocarbon group include a cycloaliphatic group having 4 to 30, preferably 4 to 20, particularly 5 to 12 carbon atoms, an aromatic hydrocarbon group having 6 to 30, preferably 6 to 20 carbon atoms, and an aromatic-aliphatic hydrocarbon group having 7 to 30, preferably 7 to 20 carbon atoms.

Examples of the cyclic hydrocarbon group include a monocyclic group, a polycyclic group, and a bridged ring group which are saturated or unsaturated. The cyclic hydrocarbon group is preferably saturated.

Particularly preferably, the cyclic hydrocarbon group has 15 or less, for example, 10 or less carbon atoms.

R⁷² may be a hydrogen atom, a methyl group, a halogen atom exclusive of a fluorine atom, a substituted or unsubstituted benzyl group, or a substituted or unsubstituted phenyl group. Examples of R⁷² include hydrogen, a methyl group, Cl, Br, I, and CN. When the main chain of the polymer to be obtained is less rigid, the crystallinity of a side chain is unlikely to be inhibited. Thus, R⁷² is preferably hydrogen, a methyl group, or Cl, preferably hydrogen or a methyl group, more preferably hydrogen.

Specific examples of the cyclic hydrocarbon group include a cyclohexyl group, a t-butyl cyclohexyl group, an isobornyl group, a dicyclopentanyl group, a dicyclopentenyl group, and an adamantyl group. The acrylate group is preferably an acrylate group or a methacrylate group, and an acrylate group is particularly preferable. Specific examples of the monomer having a cyclic hydrocarbon group include cyclohexyl (meth)acrylate, t-butyl cyclohexyl (meth)acrylate, benzyl (meth)acrylate, isobornyl (meth)acrylate, dicyclopentanyl (meth)acrylate, dicyclopentenyl (meth)acrylate, dicyclopentenyloxy ethyl (meth)acrylate, tricyclopentanyl (meth)acrylate, adamantyl (meth)acrylate, 2-methyl-2-adamantyl (meth)acrylate, and 2-ethyl-2-adamantyl (meth)acrylate.

The halogenated olefin may be a halogenated olefin having 2 to 20 carbon atoms substituted with 1 to 10 chlorine atoms, bromine atoms, or iodine atoms. The halogenated olefin is a chlorinated olefin of 2 to 20 carbon atoms, particularly an olefin of 2 to 5 carbon atoms having 1 to 5 chlorine atoms. Preferable specific examples of the halogenated olefin include halogenated vinyls such as vinyl chloride, vinyl bromide, vinyl iodide, and halogenated vinylidene such as vinylidene chloride, vinylidene bromide, and vinylidene iodide. The halogenated olefin is free from a fluorine atom.

The block segment (B2) may be one comprising a silicon-containing monomer (silicon-containing compound). Examples of the silicon-containing monomer include a monomer having a dimethylsiloxane group. The monomer having a dimethylsiloxane group is preferably a compound having a dimethylsiloxane group and an olefinic carbon-carbon double bond (particularly, a (meth)acrylic group or a vinyl group).

Specific examples of the monomer having a dimethylsiloxane group are as follows. CH₂=C(CH₃)CO₂(CH₂)₃Si(CH₃)₂[OSi(CH₃)₂]ₙOSi(CH₃)₂C₄H₉, CH₂=CHCO₂(CH₂)₃Si(CH₃)₂[OSi(CH₃)₂]ₙOSi(CH₃)₂C₄H₉

When the length (n) of the dimethylsiloxane group is longer, the glass transition temperature of a copolymer to be generated lowers, and a coating film comprising the copolymer has improved flexibility, texture, and water sliding properties. In contrast, when n is extremely long, the polymerization reactivity of the monomer having a dimethylsiloxane group decreases. The length (n) of the dimethylsiloxane group is preferably 1 to 50, more preferably 3 to 30, more preferably 3 to 20.

Specific examples of the acrylic monomer having two acrylic groups and the divinyl compound include tripropylene glycol di(meth)acrylate, divinylbenzene, tetramethylene glycol di(meth)acrylate, hexamethylene glycol di(meth)acrylate (1,6-bisacryloyl hexane), nonamethylene glycol di(meth)acrylate, decamethylene glycol di(meth)acrylate, glycerol dimethacrylate, 1-(acryloyloxy)-3-(methacryloyloxy)-2-propanol, ethylene glycol di(meth)acrylate, and 1,4-bis[4-(3-acryloyloxypropoxy)benzoyloxy]-2-methylbenzene. A trivinyl compound or a tetravinyl compound may be contained, and examples thereof include pentaerythritol tetraacrylate. When the divinyl compound (or a tetravinyl or trivinyl compound) is contained, provided is a structure containing many branched portions, which is generally referred to as a star. The "block copolymer" having the block segment (A) herein also includes ones having a star structure.

### (B3) Random Segment

The random segment (B3) is formed from at least two acrylic monomers. The acrylic monomer may be any of the above-mentioned acrylic monomer having a long-chain hydrocarbon group having 7 to 40 carbon atoms, the above-mentioned acrylic monomer having a short-chain hydrocarbon group having 1 to 6 carbon atoms, the above-mentioned acrylic monomer having a hydrophilic group, the above-mentioned acrylic monomer having a cyclic hydrocarbon group, the above-mentioned halogenated olefin, and the above-mentioned monomer having a dimethylsiloxane group. Other examples of the acrylic monomer include a divinyl compound and a silicon-containing compound. Examples of the divinyl compound include ethylene glycol di(meth)acrylate, tripropylene glycol di(meth)acrylate, divinyl benzene, tetramethylene glycol di(meth)acrylate, hexamethylene glycol di(meth)acrylate, nonamethylene glycol di(meth)acrylate, decamethylene glycol di(meth)acrylate, glycerol dimethacrylate, 1-(acryloyloxy)-3-(methacryloyloxy)-2-propanol, ethylene glycol dimethacrylate, and 1,4-bis[4-(3-acryloyloxypropoxy)benzoyloxy]-2-methylbenzene. A trivinyl compound or a tetravinyl compound may be contained, and examples thereof include pentaerythritol tetraacrylate.

When the divinyl compound (or a tetravinyl or trivinyl compound) is contained, provided is a structure containing many branched portions, which is generally referred to as a star. The "block copolymer" having the block segment (A) herein also includes ones having a star structure.

Specific examples of a combination of two types of acrylic monomers include:
stearyl (meth)acrylate/hydroxyethyl (meth)acrylate,
t-butyl (meth)acrylate/hydroxyethyl (meth)acrylate,
stearyl (meth)acrylate/hydroxybutyl (meth)acrylate,
t-butyl (meth)acrylate/hydroxybutyl (meth)acrylate,
stearyl (meth)acrylate/t-butyl (meth)acrylate,
hydroxyethyl (meth)acrylate/hydroxybutyl methacrylate glycidyl ether,
hydroxybutyl (meth)acrylate/hydroxybutyl methacrylate glycidyl ether,
hydroxyethyl (meth)acrylate/glycidyl (meth)acrylate,
hydroxybutyl (meth)acrylate/glycidyl (meth)acrylate,
stearyl (meth)acrylate/a divinyl compound (or tetravinyl or trivinyl compound),
hydroxyethyl (meth)acrylate/a divinyl compound (or tetravinyl or trivinyl compound),
hydroxybutyl (meth)acrylate/a divinyl compound (or tetravinyl or trivinyl compound), and
t-butyl (meth)acrylate/a divinyl compound (or tetravinyl or trivinyl compound).

The silicon-containing compound can be used as a monomer or a chain transfer agent. One or both of a silicon-containing monomer and a silicon-containing chain transfer agent can be used.

Examples of the silicon-containing monomer include a monomer having a silane group. The monomer having a silane group is preferably a compound having a silane group (particularly a terminal silane group) and an olefinic carbon-carbon double bond (particularly a (meth)acrylic group or a vinyl group). The monomer having a silane group may be a monomer having a terminal silane coupling group or a silane coupling group in a side chain.

The silicon-containing monomer may be one (meth)acrylic group or vinyl group and one silane group. The one (meth)acrylic group or vinyl group is preferably bonded with the one silane group via a direct bond, a (divalent) linking group such as an alkylene group having 1 to 10 carbon atoms or a siloxane group. In the case of a (meth)acrylic group, the linking group is preferably an alkylene group having 1 to 10 carbon atoms or a siloxane group. In the case of a vinyl group, the linking group is preferably a direct bond.

Specific examples of the monomer having a silane group are as follows.

CH₂=CHCO₂(CH₂)₃Si(OCH₃)₃,

CH₂=CHCO₂(CH₂)₃Si(OC₂H₅)₃,

CH₂=C(CH₃)CO₂(CH₂)₃Si(OCH₃)₃,

CH₂=C(CH₃)CO₂(CH₂)₃Si(OC₂H₅) ₃,

CH₂=CHCO₂(CH₂)₃SiCH₃(OC₂H₅)₂,

CH₂=C(CH₃)CO₂(CH₂)₃SiCH₃(OC₂H₅) ₂,

CH₂=C(CH₃)CO₂(CH₂)₃SiC₂H₅(OCH₃)₂,

CH₂=CHCO₂(CH₂)₃SiC₂H₅(OCH₃)₂,

CH₂=C(CH₃)CO₂(CH₂)₃Si(CH₃)₂(OC₂H₅) ,

CH₂=C(CH₃)CO₂(CH₂)₃Si(CH₃)₂(OCH₃) ,

CH₂=C(CH₃)CO₂(CH₂)₃Si(CH₃)₂OH ,

CH₂=CHCO₂(CH₂)₃SiCH₃[ON(CH₃)C₂H₅]₂,

CH₂=C(CH₃)CO₂(CH₂)₃SiC₆H₅[ON(CH₃)C₂H₅]₂,

CH₂=C(CH₃)CO₂(CH₂)₃Si(CH₃)₂[OSi(CH₃)₂]ₙOSi(CH₃)₂C₄H₉,

CH₂=CHCO₂(CH₂)₃Si(CH₃)₂[OSi(CH₃)₂]ₙOSi(CH₃)₂C₄H₉,

CH₂=CHSi(OCH₃)₃,

CH₂=CHSi(OC₂H₅)₃,

CH₂=CHSiCH₃(OCH₃)₂,

CH₂=CHSi(CH₃)₂(OC₂H₅) ,

CH₂=CHSi(CH₃)₂SiCH₃(OCH₃)₂,

CH₂=CHSiCH₃[ON(CH₃)C₂H₅]₂,

vinyltrichlorosilane, and
vinyltris(2-methoxyethoxy) silane.

The silicon-containing compound can be used as a chain transfer agent. The silicon-containing chain transfer agent may be a mercapto-functional organopolysiloxane. The polymerization of the monomer in the presence of the silicon-containing chain transfer agent can provide a block copolymer having a siloxane group. In one embodiment, the mercapto-functional organopolysiloxane has a siloxy unit having the following average formula:

(R₂SiO)ₐ(RR^{N}SiO)_{b}(RR^{s}SiO)_{c}

wherein a is 0 to 4,000, or 0 to 1,000, or 0 to 400,
b is 1 to 1,000, or 1 to 100, or 1 to 50,
c is 1 to 1,000, or 1 to 100, or 1 to 50,
R is independently a monovalent organic group,
or R is a hydrocarbon of 1 to 30 carbon atoms,
or R is a monovalent alkyl group having 1 to 12 carbon atoms,
or R is a methyl group,
R^{N} is a monovalent amino-functional organic group, and
R^{S} is a monovalent mercapto-functional organic group.

Examples of the amino-functional organic group R^{N} as an organic functional group include a group having the formula: -R¹NHR², the formula: -R¹NR₂², or the formula: - R¹NHR¹NHR², where each R¹ is independently a divalent hydrocarbon group having 2 or more carbon atoms, and R² is hydrogen or an alkyl group having 1 to 20 carbon atoms. Each R¹ is typically an alkylene group having 2 to 20 carbon atoms.

Some preferable examples of the amino-functional hydrocarbon group include -CH₂CH₂NH₂, -CH₂CH₂CH₂NH₂, -CH₂CHCH₃NH₂, -CH₂CH₂CH₂CH₂NH₂, -CH₂CH₂CH₂CH₂CH₂NH₂ , -CH₂CH₂CH₂CH₂CH₂CH₂NH₂, -CH₂CH₂NHCH₃, -CH₂CH₂CH₂NHCH₃, -CH₂ (CH₃) CHCH₂NHCH₃, -CH₂CH₂CH₂CH₂NHCH₃, -CH₂CH₂NHCH₂CH₂NH₂ , -CH₂CH₂CH₂NHCH₂CH₂CH₂NH₂, -CH₂CH₂CH₂CH₂NHCH₂CH₂CH₂CH₂NH₂, -CH₂CH₂NHCH₂CH₂NHCH₃ , - CH₂CH₂CH₂NHCH₂CH₂CH₂NHCH₃, -CH₂CH₂CH₂CH₂NHCH₂CH₂CH₂CH₂NHCH₃, and -CH₂CH₂NHCH₂CH2NHCH₂CH₂CH₂CH₃. The amino-functional group is typically -CH₂CH₂CH2NH₂.

Examples of R^{S} include a group represented by the formula: -R¹SR², where each R¹ is independently a divalent hydrocarbon group having at least 2 carbon atoms, and R² is hydrogen or an alkyl group having 1 to 20 carbon atoms. In the formula, each R¹ and R² are as defined above. Each R¹ is typically an alkylene group having 2 to 20 carbon atoms. Examples of the mercapto-functional group are as the following formulas: -CH₂CH₂CH₂SH, -CH₂CHCH₃SH, -CH₂CH₂CH₂CH₂SH, - CH₂CH₂CH₂CH₂CH₂SH, -CH₂CH₂CH₂CH₂CH₂CH₂SH, -CH₂CH₂SCH₃. The mercapto-functional group is typically -CH₂CH₂CH₂SH.

The acrylic monomer herein is generally (meth)acrylate or (meth)acrylamide.

Herein, "(meth)acrylate" means acrylate or methacrylate, and "(meth)acrylamide" means acrylamide or methacrylamide.

The amount of the acrylic monomer having a long-chain hydrocarbon group having 7 to 40 carbon atoms (a) may be 30 mol% or more, preferably 35 mol% or more, based on the repeating units of the block copolymer. The amount of monomer (a) may be 99 mol% or less, based on the repeating units of the block copolymer.

A molar ratio of the repeating units in the block segment (A) to the repeating unit in the other segment (B) may be, for example, 30:70 to 99:1, preferably 35:65 to 90:10, particularly 40:60 to 90:10. When the block segment (C) is present, the amount of the repeating units in the block segment (C) may be 0.1 to 30 mol%, for example, 1 to 20 mol%, based on the total of the repeating units in the block copolymer.

The number-average molecule weight (Mn) of the block copolymer may be generally 1,000 to 1,000,000, for example, 5,000 to 500,000, preferably 8,000 to 200,000, more preferably 8,000 to 100,000. The number-average molecule weight (Mn) of the block copolymer is generally measured by GPC (gel permeation chromatography). A copolymer synthesized by a living polymerization method such as an ATRP or RAFT method exhibits a unimodal peak, and the molecular weight distribution thereof (weight-average molecular weight (Mw)/number-average molecule weight (Mn)) is narrow and generally 3.0 or less, preferably 2.0 or less.

The thermophysical properties of the block copolymer of the present disclosure such as melting point, glass transition temperature, crystallization temperature, and melting energy can be measured by differential scanning calorimetry (DSC). A block copolymer is known to generally exhibit a melting point or glass transition temperature equivalent to that of a homopolymer, which consists only of the monomer as the constituent unit of the block copolymer. The block copolymer of the present disclosure also exhibits a melting point equivalent to that of a homopolymer of the monomer as the constituent unit of the block segment (A). In contrast, a copolymer that has no block segment (A) and has only a random structure exhibits a melting point lower than that of a homopolymer of the monomer as the constituent unit. A polymer comprising an acrylic monomer having a long-chain hydrocarbon group has a melting point derived from the long-chain hydrocarbon group. A higher melting point derived from the long-chain hydrocarbon group is preferable because the liquid repellency of a coating film formed of the polymer is improved. Thus, the block copolymer of the present disclosure, which exhibits a melting point equivalent to that of a homopolymer consisting only of the acrylic monomer having a long-chain hydrocarbon group, is more preferable than the random copolymer.

The melting point of the block copolymer is preferably within -15°C from (e.g., lower by 0 to 15°C than), more preferably within -10°C from, particularly preferably within -5°C from the melting point of the homopolymer.

For example, the melting point (Tm) of a homopolymer of stearyl acrylate as the acrylic monomer is 50.3°C. Thus, when stearyl acrylate is included as the acrylic monomer of the block segment (A), the melting point of the block copolymer is preferably 35.3°C or more, more preferably 40.3°C or more, and particularly preferably 45.3°C or more (the upper limit of the melting point of the block copolymer is the highest value of the melting points of homopolymers of monomers each constituting the block copolymer). Similarly, the melting point (Tm) of a homopolymer of CH₂=CHCO₂-CH₂CH₂-O-C(=O)-NH-C₁₈H₃₇ as the acrylic monomer is 72.3°C. Thus, when CH₂=CHCO₂-CH₂CH₂-O-C(=O)-NH-C₁₈H₃₇ is included as the acrylic monomer of the block segment (A), the melting point of the block copolymer is preferably 57.3°C or more, more preferably 62.3°C or more, and particularly preferably 67.3°C or more. Similarly, the melting point (Tm) of a homopolymer of CH₂=CHCO₂-CH₂CH₂-NH-C(=O)-C₁₇H₃₅ as the acrylic monomer is 93.6°C. Thus, when CH₂=CHCO₂-CH₂CH₂-NH-C(=O)-C₁₇H₃₅ is included as the acrylic monomer of the block segment (A), the melting point of the block copolymer is preferably 78.6°C or more, more preferably 83.6°C or more, and particularly preferably 88.6°C or more. When two or more acrylic monomers are included in the block segment, the melting point is preferably within -15°C from (lower by 0 to 15°C than), more preferably within -10°C from, and particularly preferably within -5°C from the lowest melting point of the melting points of the respective homopolymer (the upper limit of the melting point of the copolymer is the highest value of the melting points of homopolymers of monomers each constituting the block copolymer).

A higher melting point is preferable from the viewpoint of liquid repellency. However, the melting point of the corresponding monomer is high, problems such as decrease in the solubility of the monomer and unstable emulsification may occur during polymerization. Accordingly, the melting point of the block copolymer is preferably 40°C to 200°C, more preferably 45°C to 180°C, particularly 50°C to 170°C. The liquid repellency performance of the copolymer can be evaluated with the difference of the melting point from that of the homopolymer and the melting point value itself. Even when the melting point satisfies the above-mentioned temperature range, in order for a coating film made of the block polymer to exhibit good water-repellent performance, preferable conditions of dynamic and static contact angles of water described below are preferably also satisfied. Similarly, in order for the coating film made of the block polymer to exhibit good oil-repellent performance, preferable conditions of dynamic and static contact angles of hexadecane described below are preferably also satisfied.

The block polymer is dissolved in a solvent, and the solution is coated on a substrate using a spin-coating method or the like to produce a smooth coating film. Then, the static and dynamic contact angles of the coating film is measured to thereby enable evaluation of the liquid repellency of the polymer. The static contact angle of water is preferably 107° or more, more preferably 108° or more, and particularly preferably 110° or more. In the case of the dynamic contact angle of water, a sliding angle is preferably 20° or less, more preferably 18° or less, and particularly preferably 15° or less. In order for the polymer to exhibit water-repellency, both the static and dynamic contact angles of water preferably satisfy the above-mentioned ranges. However, when polymer exhibits a sliding angle of water of 8° or less, that is, very high sliding properties, the polymer can be determined to have good water-repellent performance if having a static contact angle of 103° or more. The static contact angle of hexadecane is preferably 40° or more. In the case of the dynamic contact angle of hexadecane, the sliding angle is preferably 9° or less, more preferably 7° or less, and particularly preferably 5° or less. In order for the polymer to exhibit oil-repellency, both the static and dynamic contact angles of hexadecane preferably satisfy the above.

The water-repellency of fabric to which the block copolymer of the present disclosure is applied can be evaluated by the shower water-repellency test (JIS-L-1092 (AATCC-22): described below). The water-repellency is graded as 0, 50, 70, 80, 90, and 100 in order of poor water-repellency to excellent water repellency, and 70 or more is preferable.

The strong water-repellency of the fabric to which the block copolymer of the present disclosure is coated, when tested by the spray method of JIS-L-1092 (AATCC-22), also can be visually evaluated with ease of repellency of water contacting with the fabric and the speed at which water falls off from the fabric. The strong water-repellency is graded as 1, 2, 3, 4, and 5 in order of poor water-repellency to excellent water repellency, and 2 or more is preferable.

Preferable forms in the shower water-repellency test and strong water-repellency test described above are the indices of the water-repellency of fabric, and the preferable forms of the present disclosure.

In the present disclosure, provided is a composition obtained by copolymerizing monomers and dispersing or dissolving the copolymer in a medium.

### (2) Liquid Medium

The liquid medium is at least one selected from water and organic solvents. The liquid medium may be an organic solvent alone. Alternatively, the liquid medium may be an aqueous medium. In other words, the aqueous medium may be water alone or a mixture of water and a (water-miscible) organic solvent. The amount of the water-miscible organic solvent may be 30% by weight or less, for example, 10% by weight or less, based on the liquid medium.

The amount of the liquid medium may be 30 to 99.5% by weight, particularly 50 to 99.3% by weight, based on the surface treatment agent.

### (3) Other Components

The surface treatment agent may contain other components.

The surface treatment agent, when being an aqueous emulsion, preferably contains an emulsifier. The emulsifier may be at least one selected from a nonionic emulsifier, a cationic emulsifier, an anionic emulsifier, and an amphoteric emulsifier.

### Nonionic Surfactant

Examples of the nonionic surfactant include an ether, an ester, an ester ether, an alkanolamide, a polyhydric alcohol, and an amine oxide.

An exemplary ether is a compound having an oxyalkylene group (preferably a polyoxyethylene group).

An exemplary ester is an ester of an alcohol and a fatty acid. An exemplary alcohol is a monohydric to hexahydric (particularly dihydric to pentahydric) alcohol of 1 to 50 carbon atoms (particularly 3 to 30 carbon atoms) (e.g., aliphatic alcohol). An exemplary fatty acid is a saturated or unsaturated fatty acid of 2 to 50 carbon atoms, particularly 5 to 30 carbon atoms.

An exemplary ester ether is a compound obtained by adding an alkylene oxide (particularly ethylene oxide) to an ester of an alcohol and a fatty acid. An exemplary alcohol is a monohydric to hexahydric (particularly dihydric to pentahydric) alcohol of 1 to 50 carbon atoms (particularly 3 to 30 carbon atoms) (e.g., aliphatic alcohol). An exemplary fatty acid is a saturated or unsaturated fatty acid of 2 to 50 carbon atoms, particularly 5 to 30 carbon atoms.

An exemplary alkanolamide is formed by a fatty acid and an alkanolamine. The alkanolamide may be a monoalkanolamide or dialkanolamino. An exemplary fatty acid is a saturated or unsaturated fatty acid of 2 to 50 carbon atoms, particularly 5 to 30 carbon atoms. The alkanolamine may be an alkanol of 2 to 50, particularly 5 to 30 carbon atoms having 1 to 3 amino groups and 1 to 5 hydroxyl groups.

The polyhydric alcohol may be a divalent to pentavalent alcohol of 10 to 30 carbon atoms.

The amine oxide may be an oxide of an amine (secondary amine or preferably tertiary amine) (e.g., 5 to 50 carbon atoms).

The nonionic surfactant is preferably a nonionic surfactant having an oxyalkylene group (preferably a polyoxyethylene group). The alkylene group in the oxyalkylene group preferably has 2 to 10 carbon atoms. Preferably, the number of oxyalkylene group in a molecule of the nonionic surfactant is generally 2 to 100.

The nonionic surfactant is selected from the group consisting of an ether, an ester, an ester ether, an alkanolamide, a polyhydric alcohol, and an amine oxide, and is preferably a nonionic surfactant having an oxyalkylene group.

The nonionic surfactant may be an alkylene oxide adduct of a linear and/or branched aliphatic (saturated and/or unsaturated) group, a polyalkylene glycol ester of a linear and/or branched fatty acid (saturated and/or unsaturated), a polyoxyethylene (POE)/polyoxypropylene (POP) copolymer (random copolymer or block copolymer), an alkylene oxide adduct of acetylene glycol, or the like. Among these, preferable are ones in which the structure of alkylene oxide added moiety and the polyalkylene glycol moiety are polyoxyethylene (POE), polyoxypropylene (POP), or a POE/POP copolymer (which may be a random copolymer or a block copolymer).

The nonionic surfactant preferably has a structure that contains no aromatic group in view of environmental problems (such as biodegradability and environmental hormone).

The nonionic surfactant may be a compound represented by the formula:

R¹O-(CH₂CH₂O)ₚ-(R²O)_{q}-R³

wherein R¹ is an alkyl group having 1 to 22 carbon atoms or an alkenyl group having 2 to 22 carbon atoms, or an acyl group,
each R² is independently the same or different and is an alkylene group having 3 or more (e.g., 3 to 10) carbon atoms,
R³ is a hydrogen atom, an alkyl group having 1 to 22 carbon atoms, or an alkenyl group having 2 to 22 carbon atoms,
p is a number of 2 or more, and
q is a number of 0 or 1 or more.
R¹ preferably has 8 to 20, particularly 10 to 18 carbon atoms. Preferable specific examples of R¹ include a lauryl group, a tridecyl group, and an oleyl group.

Examples of R² include a propylene group and a butylene group.

In the nonionic surfactant, p may be a number of 3 or more (e.g., 5 to 200). q may be a number of 2 or more (e.g., 5 to 200). In other words, -(R²O)_{q}- may form a polyoxyalkylene chain.

The nonionic surfactant may be a polyoxyethylenealkylene alkyl ether containing a hydrophilic polyoxyethylene chain and a hydrophobic oxyalkylene chain (particularly a polyoxyalkylene chain) in the center. Examples of the hydrophobic oxyalkylene chain include an oxypropylene chain, an oxybutylene chain, and a styrene chain, and among these, an oxypropylene chain is preferable.

A preferable nonionic surfactant is a surfactant represented by the formula:

R¹O-(CH₂CH₂O)ₚ-H

wherein R¹ and p are as defined above.

Specific examples of the nonionic surfactant are

C₁₀H₂₁O-(CH₂CH₂O)ₚ-(C₃H₆O)_{q}-H

C₁₂H₂₅O-(CH₂CH₂O)ₚ-(C₃H₆O)_{q}-H

C₁₆H₃₁O-(CH₂CH₂O)ₚ-(C₃H₆O)_{q}-H

C₁₆H₃₃O-(CH₂CH₂O)ₚ-(C₃H₆O)_{q}-H

C₁₈H₃₅O-(CH₂CH₂O)ₚ-(C₃H₆O)_{q}-H

C₁₈H₃₇O-(CH₂CH₂O)ₚ-(C₃H₆O)_{q}-H

C₁₂H₂₅O-(CH₂CH₂O)ₚ-(C₃H₆O)_{q}-C₁₂H₂₅

C₁₆H₃₁O-(CH₂CH₂O)ₚ-(C₃H₆O)_{q}-C₁₆H₃₁

C₁₆H₃₃O-(CH₂CH₂O)ₚ-(C₃H₆O)_{q}-C₁₂H₂₅

iso-C₁₃H₂₇O-(CH₂CH₂O)ₚ-(C₃H₆O)_{q}-H

C₁₀H₂₁COO-(CH₂CH₂O)ₚ-(C₃H₆O)_{q}-H

C₁₆H₃₃COO-(CH₂CH₂O)ₚ-(C₃H₆O)_{q}-C₁₂H₂₅

wherein p and q are as defined above,
and the like.

Specific examples of the nonionic surfactant include condensation products of ethylene oxide with hexylphenol, isooctatylphenol, hexadecanol, oleic acid, an alkane (C₁₂-C₁₆) thiol, a sorbitan monofatty acid (C₇-C₁₉), or an alkyl (C₁₂-C₁₈) amine.

The amount of the polyoxyethylene block can be 5 to 80% by weight, for example, 30 to 75% by weight, and particularly 40 to 70% by weight, based on the molecular weight of the nonionic surfactant (copolymer).

The average molecular weight of the nonionic surfactant is generally 300 to 5,000, for example, 500 to 3,000.

The nonionic surfactant may be used singly or in combinations of two or more thereof.

The nonionic surfactant is preferably a combination of two or more thereof. In the combination of two or more thereof, at least one of the nonionic surfactants may be a compound represented by R¹O-(CH₂CH₂O)ₚ-(R²O)_{q}-R³ [particularly R¹O-(CH₂CH₂O)ₚ-H], wherein the R¹ group (and/or R³ group) is a branched alkyl group (e.g., isotridecyl group). The amount of the nonionic surfactant in which the R¹ group is a branched alkyl group may be 5 to 100 parts by weight, for example, 8 to 50 parts by weight, and particularly 10 to 40 parts by weight, based on 100 parts by weight in total of the nonionic surfactant (B2). In the combination of two or more thereof, the balance nonionic surfactant may be a compound represented by R¹O-(CH₂CH₂O)ₚ-(R²O)_{q}-R³ [particularly, R¹O-(CH₂CH₂O)ₚ-H], wherein the R¹ group (and/or R³ group) is a (saturated and/or unsaturated) linear alkyl group (e.g., lauryl group (n-lauryl group)).

Examples of the nonionic surfactant can include a polyoxyethylene alkyl ether, a polyoxyethylene alkyl phenyl ether, a polyoxyethylene fatty acid ester, a sorbitan fatty acid ester, a polyoxyethylene sorbitan fatty acid ester, a polyoxyethylene sorbitol fatty acid ester, a glycerin fatty acid ester, a polyoxyethylene glycerin fatty acid ester, a polyglycerin fatty acid ester, a sucrose fatty acid ester, a polyoxyethylene alkylamine, a polyoxyethylene fatty acid amide, a fatty acid alkylolamide, an alkyl alkanolamide, acetylene glycol, an oxyethylene adduct of acetylene glycol, and a polyethylene glycol polypropylene glycol block copolymer.

Since the dynamic surface tension of the aqueous emulsion decreases (i.e., the aqueous emulsion is more likely to penetrate the substrate), the nonionic surfactant is preferably an acetylene alcohol (particularly acetylene glycol), or an oxyethylene adduct of an acetylene alcohol (particularly acetylene glycol).

A preferable nonionic surfactant is an alcohol having an unsaturated triple bond or an alkylene oxide adduct of this alcohol (both this alcohol and this alkylene oxide adduct are referred to as "acetylene alcohol compounds"). A particularly preferable nonionic surfactant is an alkylene oxide adduct of a monol or polyol having an unsaturated triple bond.

The acetylene alcohol compound is a compound having one or more triple bonds and one or more hydroxyl groups. The acetylene alcohol compound may be a compound containing a polyoxyalkylene moiety. Examples of the polyoxyalkylene moiety include polyoxyethylene, polyoxypropylene, a random addition structure of polyoxyethylene and polyoxypropylene, and a block addition structure of polyoxyethylene and polyoxypropylene.

The acetylene alcohol compound may be a compound represented by the formula:

HO-CR¹¹R¹²-C≡C-CR¹³R¹⁴-OH, or

HO-CR¹⁵R¹⁶-C≡C-H

wherein R¹¹, R¹², R¹³, R¹⁴, R¹⁵, and R¹⁶ each are independently the same or different and are a hydrogen atom or an alkyl group having 1 to 30 carbon atoms. The acetylene alcohol compound may be an alkylene oxide adduct of the compound represented by this chemical formula. The alkyl group is preferably a linear or branched alkyl group having 1 to 12 carbon atoms, particularly a linear or branched alkyl group having 6 to 12 carbon atoms. Examples thereof include a methyl group, an ethyl group, a propyl group, a butyl group, and an isobutyl group. Preferable alkylene oxides are alkylene oxides of 1 to 20 carbon atoms (particularly 2 to 5) such as ethylene oxide and propylene oxide, and the number of the alkylene oxide added is preferably 1 to 50.

Specific examples of the acetylene alcohol compound include an acetylene diol, a propargyl alcohol, 2,5-dimethyl-3-hexyne-2,5-diol, 3,6-dimethyl-4-octyne-3,6-diol, 2,4,7,9-tetramethyl-5-decyne-4,7-diol, 3,5-dimethyl-1-hexyn-3-ol, 3-methyl-1-butyn-3-ol, 3-methyl-1-pentyn-3-ol, 3-hexyne-2,5-diol, and 2-butyne-1,4-diol. Polyethoxylates and ethylene oxide adducts of these specifically exemplary compounds are also included.

The nonionic surfactant may not have a triple bond or may have a triple bond. The nonionic surfactant may be one of a nonionic surfactant free from triple bond or a nonionic surfactant having a triple bond, but may be a combination of a nonionic surfactant free from triple bond and a nonionic surfactant having a triple bond. In the combination of a nonionic surfactant free from triple bond and a nonionic surfactant having a triple bond, the weight ratio between the nonionic surfactant free from triple bond (e.g., a nonionic surfactant having an oxyalkylene group) and the nonionic surfactant having a triple bond (e.g., an acetylene alcohol compound) may be preferably 10:90 to 90:10, for example, 20:80 to 80:20.

### Cationic Surfactant

The cationic surfactant is preferably a compound free from amide group.

Examples of the cationic surfactant include an amine, an amine salt, a quaternary ammonium salt, an imidazoline, and an imidazolinium salt.

The cationic surfactant is preferably an amine salt, a quaternary ammonium salt, or an oxyethylene-added ammonium salt. Specific examples of the cationic surfactant include, but are not limited to, amine salt-type surfactants such as an alkylamine salt, an amino alcohol fatty acid derivative, a polyamine fatty acid derivative, and imidazoline, and quaternary ammonium salt-type surfactants such as an alkyl trimethyl ammonium salt, a dialkyl dimethyl ammonium salt, an alkyl dimethyl benzyl ammonium salt, a pyridinium salt, an alkylisoquinolinium salt, and benzethonium chloride.

An example of the cationic surfactant is a compound of:

R²¹-N⁺(-R²²)(-R²³)(-R²⁴)X⁻

wherein R²¹, R²², R²³, and R²⁴ each are independently the same or different and are a hydrogen atom or a hydrocarbon group having 1 to 50 carbon atoms, and
X is an anionic group. The hydrocarbon group may have an oxygen atom and may be, for example, oxyalkylene such as a polyoxyalkylene group (the alkylene has, for example, 2 to 5 carbon atoms.) . R²¹, R²², R²³, and R²⁴ each are preferably a hydrocarbon group having 1 to 30 carbon atoms (e.g., an aliphatic hydrocarbon, an aromatic hydrocarbon, or an aromatic-aliphatic hydrocarbon).

Specific examples of R²¹, R²², R²³, and R²⁴ include an alkyl group (e.g., a methyl group, a butyl group, a stearyl group, and a palmityl group), an aryl group (e.g., a phenyl group), an aralkyl group (e.g., a benzyl group (a phenyl methyl group), and a phenethyl group (a phenyl ethyl group)).

Specific examples of X include a halogen (e.g., chlorine) and an acid (e.g., an inorganic acid such as hydrochloric acid, and an organic acid such as acetic acid (particularly, a fatty acid)).

The cationic surfactant is particularly preferably a monoalkyl trimethyl ammonium salt (the alkyl has 4 to 30 carbon atoms).

The cationic surfactant is preferably an ammonium salt, particularly a quaternary ammonium salt. The cationic surfactant may be an ammonium salt represented by the formula:

R³¹ₚ-N⁺R³²_{q}X⁻

wherein each R³¹ is independently the same or different and is a linear and/or branched aliphatic (saturated and/or unsaturated) group having C₁₂ or more (e.g. , C₁₂ to C₅₀),
each R³² is independently the same or different and is H or a C1 to 4 alkyl group, a benzyl group, a polyoxyethylene group (the number of the oxyethylene group is, for example, 1 (particularly 2, especially 3) to 50) (CH₃ or C₂H₅ is particularly preferable),
X is a halogen atom (e.g., chlorine and bromine) or a C₁ to C₄ fatty acid salt group, and
p is 1 or 2, q is 2 or 3, and p + q = 4. R³¹ may have 12 to 50, for example, 12 to 30 carbon atoms.

Specific examples of the cationic surfactant include dodecyltrimethylammonium acetate, trimethyltetradecylammonium chloride, hexadecyltrimethylammonium bromide, trimethyloctadecylammonium chloride, (dodecylmethylbenzyl)trimethylammonium chloride, benzyldodecyldimethyl ammonium chloride, methyl dodecyldi(hydropolyoxyethylene)ammonium chloride, and benzyldodecyldi(hydropolyoxyethylene)ammonium chloride.

Examples of the amphoteric surfactant include alanines, imidazoliniumbetaines, amidobetaines, and acetic acid betaine, and specific examples thereof include lauryl betaine, stearyl betaine, laurylcarboxymethyl hydroxyethyl imidazolinium betaine, lauryldimethylaminoacetic acid betaine, and fatty acid amidopropyldimethylaminoacetic acid betaine.

The surfactant may be an amidoamine surfactant, which is a compound having an amide group and an amino group.

The amidoamine surfactant is preferably a compound represented by the formula:

R¹¹-C(=O)(R¹²-)N-(CH₂)ₙ-N-(-R¹³)(-R¹⁴)

wherein R¹¹, R¹², R¹³, and R¹⁴ each are independently the same or different and are a hydrogen atom or a hydrocarbon group having 1 to 30 carbon atoms, and
n is 0 to 10.
R¹¹ is preferably an alkyl group or an alkenyl group. R¹¹ may have 8 to 30, for example, 12 to 24 carbon atoms. R¹², R¹³, and R¹⁴ each are preferably a hydrogen atom or an alkyl group. R¹², R¹³, and R¹⁴ each preferably have 1 to 6, particularly 1 to 4 carbon atoms. n is 0 to 10, for example, 1 to 10, particularly 2 to 5.

Specific examples of the amidoamine surfactant include diethylaminoethyl isostearamide, dimethylaminoethyl oleamide, dimethylaminopropyl oleamide, diethylaminoethyl oleamide, diethylaminopropyl oleamide, diethylaminoethyl stearamide, diethylaminopropyl stearamide, dibutylaminoethyl stearamide, dibutylaminopropyl stearamide, dipropylaminopropyl stearamide, dipropylaminoethyl stearamide, dimethylaminoethyl stearamide, dimethylaminopropyl stearamide, diethylaminoethyl palmitamide, diethylaminopropyl palmitamide, dimethylaminoethyl palmitamide, dimethylaminopropyl palmitamide, diethylaminoethyl behenamide, diethylaminopropyl behenamide, and dimethylaminopropyl behenamide.

The amidoamine surfactant may be nonionic or ionic (cationic) and is preferably nonionic. In the case of a nonionic one, it is preferable to add an ionic compound such as an acid to ionize the surfactant for use.

Each of the nonionic surfactant, the cationic surfactant, and the amphoteric surfactant may be used alone or in a combination of at least two.

The amount of the surfactant may be 0.1 to 20 parts by weight, for example, 0.2 to 10 parts by weight, based on 100 parts by weight of the polymer.

The surface treatment agent may contain an additives as other component.

Examples of the additive include a silicon-containing compound, a wax, and an acrylic emulsion. Other examples of the additive include a fluorine-containing polymer, a drying rate adjuster, a cross-linking agent, a film formation agent, a compatibilizer, a surfactant, an antifreezing agent, a viscosity modifier, a UV absorber, an antioxidant, a pH adjuster, an antifoaming agent, a texture modifier, a slippage modifier, an antistatic agent, a hydrophilizing agent, an antibacterial agent, a preservative, an insect repellent, a fragrant agent, and a flame retarder.

The amount of the other components may be 0.1 to 70% by weight, for example, 0.5 to 50% by weight, based on the surface treatment agent.

### [Method for Producing Block Copolymer]

The block copolymer is preferably produced by using a living polymerization method, for example, a living radical polymerization method, a living anionic polymerization method, or a living cationic polymerization method. The living radical polymerization method is particularly preferable.

The living radical polymerization method is based on causing heat, light, a metal catalyst, or the like to act to thereby establish a rapid equilibrium between a small amount of propagating radical (free radical) species and a large amount of dormant species in a growth reaction. Various forms of living radical polymerization depending on dormant chains have been suggested.

For example, there have been suggested an ATRP method (atom transfer radical polymerization method), in which a halogenated alkyl is used as a dormant, a RAFT method (reversible addition fragmentation chain transfer), in which a thioester is used, a NMP method (nitroxide mediated polymerization), in which an alkoxyamine is used, and the like.

The ATRP method (atom transfer radical polymerization method) is a method for polymerizing a vinyl monomer using a polymerization initiator having a highly-reactive carbon-halogen bond and a transition metal complex that serves as a polymerization catalyst (JP 2000-514479 A, and Mitsuo Sawamoto et al., Macromolecules 1995, 28, 1721).

The RAFT method is a method for polymerizing a vinyl monomer while a chain transfer agent having a high chain transfer constant, called a RAFT agent, is added to a usual radical polymerization system (M. G. Moad et al., Macromolecules 1998, 31, 5559). As the RAFT agent, a thioester can be used.

The NMP method is a method for thermally cleaving an alkoxyamine to generate a stable nitroxide and a polymer radical and polymerizing a vinyl monomer to the polymer radical (M. K. Georges et al., Macromolecules 1993, 26, 2987). The nitroxide under cleavage reacts only with a carbon-centered free radical without starting polymerization. The nitroxide and the polymer radical reacted with the monomer are bonded again and can stably exist as a dormant. The living radical polymerization proceeds with the process as described above.

The ATRP method (atom transfer radical polymerization method) will be described in detail hereinbelow.

In the ATRP method, a polymerization initiator having a highly-reactive carbon-halogen bond and a transition metal complex that serves as a polymerization catalyst are used to polymerize a vinyl monomer.

Examples of the polymerization initiator include a benzyl halide, a halogenated alkane, a haloester, a haloketone, a halonitrile, and a sulfonyl halide. Examples of the benzylhalide include 1-phenylethyl chloride or 1-bromoethylbenzene. Examples of the halogenated alkane include chloroform or carbon tetrachloride. Examples of the haloester include ethyl 2-bromoisobutyrate or ethyl 2-bromopropionate. Examples of haloketone include bromoacetone or bromoacetophenone. Examples of the halonitrile include 2-bromopropionitrile. Examples of the sulfonyl halide include p-toluenesulfonyl chloride.

The amount of the polymerization initiator to be used is, but not limited to, usually 0.001 to 10 mol/l, preferably 0.010 to 5 mol/l as the concentration in the reaction system.

Examples of the transition metal complex include, but are not limited to, metal complexes each having a transition metal (M), as the central metal, selected from the 7th to 11th group in the periodic table.

Specific examples of the transition metal (M) include Cu0, Cu⁺, Ni0, Ni⁺, Ni²⁺, Pd⁰, Pd⁺, Pt⁰, Pt⁺, Pt²⁺, Rh⁺, Rh²⁺, Rh³⁺, Co⁺, Co²⁺, Ir⁰, Ir⁺, Ir²⁺, Ir³⁺, Fe²⁺, Ru²⁺, Ru³⁺, Ru⁴⁺, Ru⁵⁺, Os²⁺, Os³⁺, Re²⁺, Re³⁺, Re⁴⁺, Re⁶⁺, Mn²⁺, Mn³⁺. Among these, Cu⁺, Ni2⁺, Fe²⁺, and Ru²⁺ are preferable in respect of catalytic activity.

Metal compounds each to be used in a transition metal complex will be exemplified. Examples of a copper compound having monovalent copper metal include cuprous chloride, cuprous bromide, cuprous iodide, and cuprous cyanide; Examples of a nickel compound having divalent nickel include nickel dichloride, nickel dibromide, and nickel diiodide; Examples of an iron compound having divalent iron include iron dichloride, iron dibromide, and iron diiodide; and Examples of a ruthenium compound having divalent ruthenium include ruthenium dichloride, ruthenium dibromide, and ruthenium diiodide.

In respect of enabling solubilization in a polymerization solvent and a reversible change of a redox conjugated complex to thereby improve the catalytic activity, it is preferred to coordinate organic ligands to the above-mentioned transition metal (M). Examples of a coordinating atom to the metal include a nitrogen atom, an oxygen atom, a phosphorous atom, and a sulfur atom, and a nitrogen atom or a phosphorous atom is preferable. Specific examples of the organic ligand include 2,2'-bipyridyl and a derivative thereof, 1,10-phenanthroline and a derivative thereof, tetramethylethylenediamine, pentamethyldiethylenetriamine, tris(dimethylaminoethyl)amine, triphenylphosphine, and tributylphosphine. The amount of the organic ligand to be used is, but not limited to, usually 0.1 to 100 times, preferably 1 to 10 times the amount of the transition metal (M).

The amount of the transition metal (M) to be used is, but not limited to, usually 0.01 to 100 mol, preferably 0.1 to 50 mol, and further preferably 0.1 to 10 mol, based on 1 mol of the polymerization initiating terminal of the polymerization initiator.

In the atom transfer radical polymerization, a reducing agent for the transition metal also may coexist. Allowing the reducing agent to coexist enables deactivation of the catalyst to decrease and polymerization to proceed without strict control of deoxygenation. The coexistence also enables the amount of the transition metal used to be reduced, facilitates removal of the transition metal from a product, and additionally provides an advantage in terms of cost. Examples of the reducing agent include zerovalent copper, ascorbic acid, sodium ascorbate, divalent tin, and sugar. The amount of the reducing agent to be added is generally of the order of 10 molar equivalents, based on the transition metal catalyst. A radical polymerization initiator such as an azo compound may be also added as the reducing agent.

The atom transfer radical polymerization can be conducted in the absence of a solvent and also can be conducted in the presence of a solvent. Examples of the solvent to be used as required include water; ethers such as diethyl ether, tetrahydrofuran, diphenylether, anisole, and dimethoxybenzene; amides such as N,N-dimethylformamide and N,N-dimethylacetamide; nitriles such as acetonitrile, propionitrile, and benzonitrile; ester compounds or carbonate compounds such as acetone, methyl ethyl ketone, methyl isobutyl ketone, ethyl acetate, butyl acetate, ethylene carbonate, and propylene carbonate; alcohols such as methanol, ethanol, propanol, isopropanol, n-butyl alcohol, t-butyl alcohol, and isoamyl alcohol; aromatic hydrocarbons such as benzene and toluene; and halogenated hydrocarbons such as chlorobenzene, methylene chloride, chloroform, chlorobenzene, and benzotrifluoride.

The amount of the solvent to be used is, but not limited to, usually 30 to 5,000 parts by weight, preferably 50 to 2,000 parts by weight, and further preferably 50 to 1,000 parts by weight, based on 100 parts by weight of the amount of the monomer fed.

The atom transfer radical polymerization is conducted usually at a temperature of -50 to 200°C, preferably of 0 to 150°C, and further preferably of 20 to 130°C. A procedure for feeding each material is not limited, and such materials may be fed in any manner. Preferably, materials other than the polymerization initiator is dissolved first to prepare a uniform solution and the initiator is added for polymerization immediately before the polymerization temperature is reached.

After the polymerization is finished, it is industrially general to subject the polymerization reaction solution as is to the next step (e.g., a step of forming a second block chain). However, the first block chain may be separated from the polymerization reaction solution as required. For example, in accordance with a well-known method, it is possible to conduct distillation-off of the residual monomer or solvent, reprecipitation in an appropriate solvent, filtration and centrifuge of the precipitated polymer, and washing and drying the polymer.

Alternatively, diluting the polymerization solution with a good solvent for the polymer to be produced, for example, tetrahydrofuran (THF), toluene, or the like and passing the diluted solution through a column or pad of alumina, silica, or clay enables removal of the transition metal complex and organic ligands used as the catalyst from the reaction solution. In addition, a method of treating the transition metal and organic ligands contained in the reaction solution by an extraction operation such as liquid separation, or a method of treating them by dispersing a metal adsorbent in the reaction solution may be employed.

The RAFT (reversible addition-fragmentation chain transfer polymerization) method will be described in detail hereinbelow.

In the RAFT method, polymerization is caused to proceed by allowing a dithiocarbamate derivative (RAFT agent), a vinyl monomer, and a radical polymerization initiator to coexist. A radical to be generated is added to a thioester compound or a C=S bond of a polymer terminal generated, and the original radical species is converted to a similar thioester form. In this manner, the polymerization proceeds via degenerative chain transfer, in which radical addition to the thioester and cleavage are reversibly repeated.

Any type of RAFT agent known to those skilled in the art may be used. The structure of a typical RAFT agent is represented by the following formula A. An optimal functional groups Z and R are determined in accordance with the type of a monomer to be polymerized. 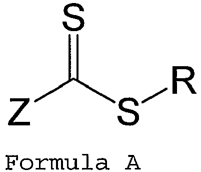
R is selected from -CH₂R¹, -CHR¹R'¹, and -CR¹R'¹R''¹, R¹, R'¹, and R''¹ are each independently selected from an optionally substituted alkyl, a saturated or unsaturated or aromatic carbocyclic or heterocyclic ring, optionally substituted alkylthio, an optionally substituted alkoxy group, optionally substituted dialkylamino, an organic metal group, acyl, acyloxy, carboxy (and an ester and/or salt thereof), sulfonate (and a salt and/or sulfonate thereof), alkoxy- or aryloxy-carbonyl, and a polymer chain produced with an optional polymerization mechanism, and may be the same or different from one another,
Z is selected from hydrogen, a halogen (chlorine, bromine, iodine), optionally substituted alkyl, optionally substituted aryl, an optionally substituted heterocycle, -SR², optionally substituted alkoxycarbonyl, optionally substituted aryloxycarbonyl (-COOR²), carboxy (-COOH), optionally substituted acyloxy (-OCOR²), optionally substituted carbamoyl, -CONHR², -CONR²R³, cyano (-CN), dialkyl or diaryl phosphonate [-P(=O)OR²₂], dialkyl or diaryl phosphinite [-P(=O)R²₂], a polymer chain produced with an optional polymerization mechanism, a -OR² group, and a -NR²R³ group, R² and R³ are each selected from the group consisting of C1 to C18 alkyl, C₂ to C₁₈ alkenyl, C⁶ to C₁₈ aryl, a heterocycle, aralkyl, and alkaryl and may be the same or different from each other. Each of these groups may be substituted as required, and the substituent thereof is selected from epoxy, hydroxyl, alkoxy, acyl, acyloxy, carboxyl (and an ester and/or salt thereof), sulfonate (and a salt and/or sulfonate thereof), alkoxy- or aryloxy-carbonyl, isocyanate, cyano, silyl, and halo- and dialkyl-amino.

The amount of the RAFT agent is determined in accordance with the molecular weight of an intended polymer. The RAFT agent is bonded to the terminal of each monomer. Thus, when a polymer of 100-mer is intended, approximately 1 mol% (0.5 to 3 mol%) of the RAFT agent is used, based on 100 mol% of the monomer. A trithiocarbonate-type RAFT agent having a bilaterally symmetric structural formula leads to generation of an A-B-A-type triblock, in which a trithiocarbonate group derived from the RAFT agent is located not at the terminal but in the center. The amount of the triblock-type RAFT agent is determined in the same manner as for the RAFT agent mentioned above.

Radical polymerization initiators are known to those skilled in the art, and an optional-type radical polymerization initiator selected from particularly an azo compound and a peroxide or redox-type initiator may be used. A chemical species that can produce a conventional free radical is referred to as a radical polymerization initiator.

Examples of the azo compound include 2,2'-azobisisobutyronitrile (AIBN), 2,2'-azobis 2,4-dimethyl valeronitrile, 2,2'-azobis(2-methylpropionamidine)dihydrochloride, and 4,4'-azobis(4-cyanovaleric acid). Examples of the peroxide compound include tert-butylperoxyacetate, tert-butylperoxybenzoate (TBPO), and dicumyl peroxide or dibenzoyl peroxide. Examples of the redox compound include peroxosulfates, such as potassium persulfate, sodium persulfate, and ammonium persulfate, and the redox compound can be used with a metabisulfite, for example, sodium metabisulphite.

The polymerization initiator is generally used at 1 to 50 mol%, preferably 2 to 35 mol%, based on the weight of the RAFT agent.

The reaction of the RAFT method is conducted usually at 40°C to 150°C although the temperature depends on the radical polymerization initiator to be used. The polymerization is often conducted under atmospheric pressure but can be conducted under pressure.

The RAFT method can be conducted in the absence of a solvent but also can be conducted in the presence of a solvent. Solvents to be used as required are the same as those for the ATRP mentioned above. The reaction can be conducted also in water, and also proceeds in emulsion polymerization. As the emulsifier used in such a case, a nonionic emulsifier, a cationic emulsifier, or an anionic emulsifier, which can be used in common emulsion polymerization, can be used.

Physical properties such as melting point and water-repellency of a block copolymer to be obtained do not depend on its synthesis method. The terminal of a copolymer to be obtained has a structure derived from its synthesis method (e.g., a thioester group in RAFT). Unless a specific functional group (hydrophilic group) is possessed, physical properties such as melting point and water-repellency of a copolymer to be obtained are identical.

The block copolymer obtained is diluted with or dispersed in water, an organic solvent, or the like as required and then can be prepared into an optional form such as an emulsion, an organic solvent solution, or an aerosol.

The surface treatment agent of the present disclosure may be in the form of a solution, an emulsion (particularly, an aqueous dispersion), or an aerosol. The surface treatment agent comprises a block copolymer (an active component of the surface treatment agent) and a medium (particularly, a liquid medium, for example, an organic solvent and/or water). The amount of the medium may be, for example, 5 to 99.9% by weight and particularly 10 to 80% by weight, based on the surface treatment agent.

In the surface treatment agent, the concentration of the copolymer may be 0.01 to 70% by weight, for example, 0.1 to 50% by weight.

The surface treatment agent can be used as a water- and oil-repellent agent, a soil resistant agent, a soil release agent, a release agent, or a mold release agent. The surface treatment agent is particularly suitable as a water-repellent agent.

The surface treatment agent can be applied to an article to be treated by a conventionally known method. Usually, employed is a method of dispersing or diluting the surface treatment agent in or with an organic solvent or water, attaching the agent to the surface of the article to be treated by a known method such as immersion coating, spray coating, or foam coating, and drying the agent. Alternatively, the surface treatment agent may be applied along with an appropriate cross-linking agent (e.g., a blocked isocyanate), if necessary, and then cured. Additionally, an insect repellent, a softening agent, an antibacterial agent, a flame retarder, an antistatic agent, a coating material fixing agent, and a wrinkle-resistant agent can be added to and used in combination with the surface treatment agent of the present disclosure. The concentration of the copolymer in the treatment liquid to be in contact with the substrate may be 0.01 to 10% by weight (particularly, in case of immersion coating), for example, 0.05 to 10% by weight.

Examples of the article to be treated with the surface treatment agent of the present disclosure (e.g., water- and oil-repellent agent) can include a textile product, masonry, a filter (e.g., an electrostatic filter), a dust protective mask, a part of fuel cell (e.g., a gaseous diffusion electrode and a gaseous diffusion support), glass, paper, wood, leather, fur, asbestos, a brick, cement, metal and oxide, ceramic products, plastics, a coated surface, and plaster. The textile product includes various examples. Examples of the textile product include animal- or vegetable-origin natural fibers such as cotton, hemp, wool, and silk; synthetic fibers such as polyamide, polyester, polyvinyl alcohol, polyacrylonitrile, polyvinyl chloride, and polypropylene; semi-synthetic fibers such as rayon and acetate; inorganic fibers such as glass fiber, carbon fiber and asbestos fiber; and a mixture fiber of these.

The textile product may be any of a form of fiber, fabric, or the like.

The water-repellent composition of the present disclosure can be used also as a soil resistant agent, a release agent, or a mold release agent (e.g., an internal mold release agent or an external mold release agent). For example, the surface of the substrate can be easily released from other surface (other surface in the substrate or a surface in other substrate).

The block copolymer can be applied to a fibrous substrate (e.g., a textile product) by any known method for treating textile products with a liquid. When the textile product is fabric, the fabric may be immersed in the solution, or the solution may be attached or sprayed to the fabric. The treated textile product is dried, preferably heated at 80°C to 200°C, for example, in order to exhibit liquid repellency (water-repellency and/or oil-repellency).

Alternatively, the block copolymer may be applied to a textile product via a cleaning process, for example, may be applied to a textile product in a laundry application or dry cleaning process.

The textile product to be treated is typically fabric, including woven, knitted and nonwoven fabrics, fabrics in garment form and carpets, but also may be a fiber or yarn or intermediate textile product (e.g., a sliver or roving). The textile product material may be natural fiber (e.g., cotton or wool), chemical fiber (e.g., viscose rayon or lyocell), or synthetic fiber (e.g., polyester, polyamide or acrylic fiber), or may be a mixture of fibers (e.g., a mixture of natural fiber and synthetic fiber). The method of the present disclosure generally renders a textile product hydrophobic and water-repellency.

Alternatively, the fibrous substrate may be leather. The polymeric product can be applied to leather from an aqueous solution or emulsion at various stages of leather processing, for example during leather wet processing or during leather finishing, to render the leather hydrophobic and oleophobic.

Alternatively, the fibrous substrate may be paper. The polymeric product may be applied to preformed paper or may be applied at various stages of papermaking, for example, during the drying period of the paper.

The term "treatment" means that the surface treatment agent is applied to an article to be treated by immersion, spray, coating, or the like. The treatment causes the copolymer as an active component of the surface treatment agent to penetrate the internal of the article to be treated and/or to adhere on the surface of the article to be treated.

### Examples

Hereinafter, the present disclosure will be described with reference to examples, but the present disclosure is not intended to be limited to these examples.

Hereinafter, a part or % or a ratio represents a part by weight, % by weight, or a weight ratio, respectively, unless otherwise specified.

Test procedures are as follows.

### [Number-Average Molecule Weight (Mn), Weight-Average Molecular Weight (Mw), and Molecular Weight Distribution (Mw/Mn)]

The number-average molecule weight (Mn), weight-average molecular weight (Mw), and molecular weight distribution (Mw/Mn) were determined by gel permeation chromatography (GPC). For GPC, tetrahydrofuran was used as a developing liquid, KF-606M, KF-601, and KF-800D manufactured by Shodex were used as columns, and the molecular weights and the like were calculated in terms of polystyrene.

### [Compositional Features of Copolymer by NMR (Nuclear Magnetic Resonance Method)]

For 1H-NMR (nuclear magnetic resonance method) measurement, deuterochloroform was used as the solvent.

### [Thermophysical Property Measurement by Differential Scanning Calorimetry (DSC)]

The melting point of the copolymer was calculated by differential scanning calorimetry (DSC). In the DSC measurement, under a nitrogen atmosphere, the copolymer was cooled to -30°C, then the temperature was raised at 10°C/minute to 170°C, and the polymer was cooled again to -30°C. Thereafter, the melting point observed in the temperature rising process at 10°C/minute to 170°C was measured. In a polymer in which a plurality of melting peaks appear, the peak having the largest quantity of heat of melting, which was derived from melting of long-chain alkyl, was taken as the melting point.

### [Measurement of Static Contact Angle and Dynamic Contact Angle (Sliding Angle)]

A chloroform solution having a solid concentration of the obtained copolymer of 1.0% was spin-coated on silicon wafer substrates. The dynamic and static contact angles on a sample air-dried only and samples annealed at each temperature (40°C, 45°C, 80°C, and 120°C) for 15 minutes were measured. For the static contact angle, 2 µL of water or hexadecane was dropped on the coating film, and the contact angle one minute after the droplet was reached was measured. For the dynamic contact angle (sliding angle), 20 µL of water or 5 µL of n-hexadecane was dropped on the coating film, the substrate was inclined at a rate of 2° per second, and the angle at which the droplet began to slide was measured as the sliding angle. "> 85" indicates that the droplet does not slide even if the substrate was inclined by 85°. The annealing temperature "No" in Table 1 indicates the measurement value of the sample air-dried only.

### [Water-Repellency Test]

A treatment liquid having a solid concentration of 1.5% was prepared using chloroform as the solvent. Fabric was immersed in this test solution, passed through a mangle for heat treatment, and then evaluated for water-repellency. The water-repellency of the treated fabric was evaluated in compliance with the spray method of JIS-L-1092 (AATCC-22). As shown in the table described below, the water-repellency was expressed by water repellency No. A larger score indicates better water-repellency. "+" attached to a figure means better water repellency than that expressed by only the figure, and "-" attached to the figure means poorer water repellency than that expressed only by the figure. Polyester fabric (PET) and nylon fabric (Ny) were used for the evaluation.

| Water-repellency No. | State |
|---|---|
| 100 | No wet or water droplets adhesion on the surface |
| 90 | No wet but small water droplets adhesion on the surface |
| 80 | Separate small water droplets-like wet on the surface |
| 70 | Wet on half of surface and separate small wet which penetrates fabric |
| 50 | Wet on the whole surface |
| 0 | Wet on front and back of the whole surfaces |

### [Strong Water-Repellency Test]

During testing by the spray method of JIS-L-1092 (AATCC-22), the ease of repellency of water contacting with the fabric and the speed at which water falls off from the fabric were visually evaluated. A larger score indicates better strong water-repellency.

| Strong water-repellency No. | State |
|---|---|
| 5 | Water contacting with the fabric is repelled far away from the fabric, and water droplets are scarcely formed on the fabric and readily fall off. |
| 4 | Water contacting with the fabric is repelled away from the fabric, and the speed at which water falls off from the fabric is smaller than that of "5". |
| 3 | Water contacting with the fabric is slightly floated and splashed from the fabric, and water droplets are formed on the fabric but roll over and fall off without staying on the fabric. |
| 2 | Water contacting with the fabric substantially does not leave the fabric, and water droplets formed on the fabric roll over and fall off, but the number of water droplets staying on the fabric is larger than that in "3". |
| 1 | Water contacting with the fabric roll over so as to move along the fabric, and many water droplets stay on the fabric. |

### <Example 1> Synthesis by ATRP Method: StA/HEA

In a reaction vessel purged with nitrogen, 3.0 ml of toluene, 14 mg of Cu(0), 60 mg of CuBr(I), 179 mg of 2,2'-bipyridyl, 4.3 g of stearyl acrylate (StA) as a first monomer, and 28 µl of ethyl 2-bromoisobutyrate were added, and a reaction was conducted by heating at 110°C under stirring. After consumption of the first monomer was confirmed by ¹H NMR measurement, hydroxyethyl acrylate (HEA) was added as a second monomer. After consumption of unreacted monomers was confirmed by ¹H NMR measurement, the polymerization solution was subjected to liquid separation using ammonia and the Cu catalyst was removed. Then, reprecipitation in acetone provided a block copolymer (1). The reaction quantitatively proceeded.

### <Example 2> StA/HEA

The reaction was conducted in the same manner as in Example 1 to provide a block copolymer (2) except that 1 molar equivalent of Cu(0), 2 molar equivalents of CuBr(I), 6 molar equivalents of 2,2'-bipyridyl, 50 molar equivalents of StA as the first monomer, and 50 molar equivalents of HEA as the second monomer were used per molar equivalent of ethyl 2-bromoisobutyrate as the initiator.

### <Example 3> StA/AA

The reaction was conducted in the same manner as in Example 2 to provide a block copolymer (3') except that 50 molar equivalents of StA as the first monomer and 50 molar equivalents of t-butyl acrylate (tBuA) as the second monomer were used per molar equivalent of ethyl 2-bromoisobutyrate as the initiator. Thereafter, a deprotection reaction was conducted by causing 5 equivalents of trifluoroacetic acid to react per unit of tBuA, and reprecipitation in acetone provided a block copolymer (3).

### <Example 4> StA/DMS

The reaction was conducted in the same manner as in Example 2 to provide a block copolymer (4) except that 50 molar equivalents of StA as the first monomer and 4 molar equivalents of CH₂=C(CH₃)CO₂(CH₂)₃Si(CH₃)₂[OSi(CH₃)₂]ₙ-OSi(CH₃)₂C₄H₉ (DMS) as the second monomer were used per molar equivalent of ethyl 2-bromoisobutyrate as the initiator.

### <Example 5> StA/HEMA

The reaction was conducted in the same manner as in Example 2 to provide a block copolymer (5) except that 50 molar equivalents of StA as the first monomer and 50 molar equivalents of hydroxyl methacrylate (HEMA) as the second monomer were used per molar equivalent of ethyl 2-bromoisobutyrate as the initiator.

### <Comparative Example 1> StA/HEA

The reaction was conducted in the same manner as in Example 2 to provide a random copolymer (1) except that 60 molar equivalents of StA as the first monomer and 40 molar equivalents of HEA as the second monomer were used per molar equivalent of ethyl 2-bromoisobutyrate as the initiator and the first monomer and the second monomer were simultaneously added to the reaction vessel.

### <Comparative Example 2> StA/AA

The reaction was conducted in the same manner as in Example 2 to provide a random copolymer (2') except that 50 molar equivalents of StA as the first monomer and 50 molar equivalents of tBuA as the second monomer were used per molar equivalent of ethyl 2-bromoisobutyrate as the initiator and the first monomer and the second monomer were simultaneously added to the reaction vessel. Thereafter, a deprotection reaction was conducted by causing 5 equivalents of trifluoroacetic acid to react per unit of tBuA, and reprecipitation in acetone provided a random copolymer (2).

### <Example 6> C18URA/HEA

The reaction was conducted in the same manner as in Example 2 to provide a block copolymer (6) except that 50 molar equivalents of CH₂=CHCO₂-CH₂CH₂-O-C(=O)-NH-C₁₈H₃₇ (C18URA) as the first monomer and 50 molar equivalents of HEA as the second monomer were used per molar equivalent of ethyl 2-bromoisobutyrate as the initiator.

### <Example 7> C18UA/HEA

The reaction was conducted in the same manner as in Example 2 to provide a block copolymer (7) except that 50 molar equivalents of CH₂=CHCO₂-CH₂CH₂-NH-C(=O)-O-C₁₈H₃₇ (C18UA) as the first monomer and 50 molar equivalents of HEA as the second monomer were used per molar equivalent of ethyl 2-bromoisobutyrate as the initiator.

### <Example 8> C18URA/tBuA

The reaction was conducted in the same manner as in Example 2 to provide a block copolymer (8) except that 50 molar equivalents of C18URA as the first monomer and 50 molar equivalents of tBuA as the second monomer were used per molar equivalent of ethyl 2-bromoisobutyrate as the initiator.

### <Example 9> C18URA/AA

A deprotection reaction was conducted by causing 5 equivalents of trifluoroacetic acid to react per unit of tBuA of the block copolymer (8), and reprecipitation in acetone provided a block copolymer (9).

### <Example 10> C18URA/DMA

The reaction was conducted in the same manner as in Example 2 to provide a block copolymer (10) except that 40 molar equivalents of C18URA as the first monomer and 4 molar equivalents of CH₂=C(CH₃)CO₂(CH₂)₃Si(CH₃)₂[OSi(CH₃)₂]ₙOSi(CH₃)₂C₄H₉ (DMS) as the second monomer were used per molar equivalent of ethyl 2-bromoisobutyrate as the initiator.

### <Example 11> Synthesis by RAFT Method: C18URA/StA

In a reaction vessel purged with nitrogen, 35 mg of cyanomethyl dodecyltrithiocarbonate as a RAFT initiator, 0.1 molar equivalents of 2,2'-azobisisobutyronitrile (AIBN) and 65 molar equivalents of C18URA as a first monomer, based on the RAFT initiator, and 3.0 ml of toluene were added, and a reaction was conducted by heating at 70°C under stirring. After consumption of the first monomer was confirmed by ¹H NMR measurement, 35 molar equivalents of StA as a second monomer (based on the RAFT initiator) were added. After consumption of unreacted monomers was confirmed by ¹H NMR measurement, reprecipitation in acetone provided a block copolymer (11). The reaction quantitatively proceeded.

### <Example 12> C18URA/StA

The reaction was conducted in the same manner as in Example 11 to provide a block copolymer (12) except that 50 molar equivalents of C18URA as the first monomer and 50 molar equivalents of StA as the second monomer were used per molar equivalent of cyanomethyl dodecyltrithiocarbonate as the RAFT initiator.

### <Comparative Example 3> C18URA/HEA

The reaction was conducted in the same manner as in Example 11 to provide a random copolymer (3) except that 50 molar equivalents of C18URA as the first monomer and 50 molar equivalents of HEA as the second monomer were used per molar equivalent of cyanomethyl dodecyltrithiocarbonate as the RAFT initiator and the first monomer and the second monomer were simultaneously added to the reaction vessel.

### <Comparative Example 4> C18URA/tBuA

The reaction was conducted in the same manner as in Example 11 to provide a random copolymer (4) except that 50 molar equivalents of C18URA as the first monomer and 50 molar equivalents of tBuA as the second monomer were used per molar equivalent of cyanomethyl dodecyltrithiocarbonate as the RAFT initiator and the first monomer and the second monomer were simultaneously added to the reaction vessel.

### <Comparative Example 5> C18URA/AA

A deprotection reaction was conducted by causing 5 equivalents of trifluoroacetic acid to react per unit of tBuA of the random copolymer (4), and reprecipitation in acetone provided a random copolymer (5)

### <Comparative Example 6> C18URA/StA

The reaction was conducted in the same manner as in Example 11 to provide a random copolymer (6) except that 50 molar equivalents of C18URA as the first monomer and 50 molar equivalents of StA as the second monomer were used per molar equivalent of cyanomethyl dodecyltrithiocarbonate as the RAFT initiator and the first monomer and the second monomer were simultaneously added to the reaction vessel.

### <Example 13> C18URA/HEA/StA

In a reaction vessel purged with nitrogen, 35 mg of cyanomethyl dodecyltrithiocarbonate as a RAFT initiator, 0.1 molar equivalents of 2,2'-azobisisobutyronitrile (AIBN) and 30 molar equivalents of C18URA as a first monomer, based on the RAFT initiator, and 3.0 ml of toluene were added, and a reaction was conducted by heating at 70°C under stirring. After consumption of the first monomer was confirmed by ¹H NMR measurement, 40 molar equivalents of HEA as a second monomer (based on the RAFT initiator) were added. After consumption of unreacted monomers was confirmed by ¹H NMR measurement, 30 molar equivalents of StA as a third monomer (based on the RAFT initiator) were added. After consumption of unreacted monomers was confirmed by ¹H NMR measurement, reprecipitation in acetone provided a block copolymer (13). The reaction quantitatively proceeded.

### <Example 14> StA/diA

The reaction was conducted in the same manner as in Example 11 to provide a block copolymer (14) except that 100 molar equivalents of StA as the first monomer and 1 molar equivalent of 1,6-bisacryloyl hexane (diA) as the second monomer were used per molar equivalent of cyanomethyl dodecyltrithiocarbonate as the RAFT initiator.

### <Example 15> C18URA/diA

The reaction was conducted in the same manner as in Example 11 to provide a block copolymer (15) except that 100 molar equivalents of C18URA as the first monomer and 1 molar equivalent of 1,6-bisacryloyl hexane (diA) as the second monomer were used per molar equivalent of cyanomethyl dodecyltrithiocarbonate as the RAFT initiator.

### <Example 16> Emulsion Polymerization: StA/tBuA

In a reaction vessel purged with nitrogen, 27 mg of 2-[(dodecylsulfanylthiocarbonyl)sulfanyl]propanoic acid as a RAFT initiator, 0.1 molar equivalents of 4,4'-azobis(4-cyanovaleric acid) and 32 molar equivalents of StA as a first monomer, based on the RAFT initiator, 2.5% by weight polyethylene glycol monooleyl ether, based on StA, and 3.0 ml of pure water were added and subject to ultrasonication to prepare an emulsified solution, and a reaction was conducted by heating at 70°C under stirring. After consumption of the first monomer was confirmed by ¹H NMR measurement, 18 molar equivalents of tBuA as a second monomer (based on the RAFT initiator) were added. After consumption of unreacted monomers was confirmed by ¹H NMR measurement, reprecipitation in acetone provided a block copolymer (16). The reaction quantitatively proceeded. The block copolymer (16) had a weight-average molecular weight (Mw) of 14,300 and a molecular weight distribution (Mw/Mn) of 1.15.

### <Example 17> Emulsion Polymerization: StA/HEA

The reaction was conducted in the same manner as in Example 16 to provide a block copolymer (17) except that 50 molar equivalents of StA as the first monomer and 5 molar equivalents of HEA as the second monomer were used per molar equivalent of 2-[(dodecylsulfanylthiocarbonyl)sulfanyl]propanoic acid as the RAFT initiator. The block copolymer (17) had a weight-average molecular weight (Mw) of 14,800 and a molecular weight distribution (Mw/Mn) of 1.17.

The number-average molecule weight (Mn), weight-average molecular weight (Mw), molecular weight distribution (Mw/Mn), copolymer compositional features, melting point, static and dynamic contact angles, and water-repellency test and strong water-repellency test results of Examples 1 to 15 and Comparative Examples 1 to 6 are shown in Table 1.

**[Table 1]**

| | First monomer | Second monomer | Copolymer ingredients and Molecular weight | | | Hexadecane contact angle | | | Melting point Tm | Water contact angle | | | Shower water repellency test | | Strong water repellency test | |
|---|---|---|---|---|---|---|---|---|---|---|---|---|---|---|---|---|
| | | | mol% | Mw | Mw/Mn | Static [°] | Dynamic [°] | Anneal temperature [°C] | °C | Static [°] | Dynamic [°] | Anneal temperature [°C] | PET | Ny | PET | Ny |
| Ex. 1 | StA | HEA | 74:26 | 20000 | 1.73 | 40.9 | 5 | No | 48.4 | 107.9 | 15 | 80°C | 80 | - | - | - |
| Ex. 2 | StA | HEA | 57:43 | 10800 | 1.41 | 41.1 | 5 | No | 47.6 | 109.3 | 15 | 80°C | - | - | - | - |
| Ex. 3 | StA | AA | 50:50 | 19700 | 1.57 | 41.8 | 9 | No | 47.8 | 108.9 | 16 | 40°C | 90- | 95 | - | 2 |
| Ex. 4 | StA | DMS | 96:4 | 24300 | 1.89 | - | - | - | 49.5 | 106.4 | 4 | No | - | - | - | - |
| Ex. 5 | StA | HEMA | 94:6 | 22700 | 1.78 | 41.8 | 5 | 45°C | 50.6 | 108.5 | 13 | 45°C | - | - | - | - |
| Com. Ex. 1 | StA | HEA | 62:38 | 28800 | 1.59 | 39.5 | 5 | No | 48.9 | 102 | 44 | 80°C | 70- | 90- | 1 | 2 |
| Com. Ex. 2 | StA | AA | 50:50 | 39900 | 2.29 | 38.4 | 4 | No | 45.5 | 105.7 | 28 | 80°C | - | - | - | - |
| Ex. 6 | C18URA | HEA | 50:50 | 16600 | 2.45 | 43.1 | 4 | No | 70.7 | 108.1 | 14 | 120°C | 90 | - | 2-3 | 2-3 |
| Ex. 7 | C18UA | HEA | 53:47 | 29000 | 2.04 | 42.3 | 5 | No | 70.3 | 107.1 | 14 | 120°C | - | - | - | - |
| Ex. 8 | C18URA | tBuA | 50:50 | 32600 | 1.83 | 44.2 | 4 | 120°C | 69.4 | 109.6 | 5 | 120°C | - | - | - | - |
| Ex. 9 | C18URA | AA | 50:50 | 25700 | 1.72 | 43.2 | 5 | 80°C | 70.0 | 108.8 | 7 | 80°C | 80+ | 80+ | - | - |
| Ex. 10 | C18URA | DMS | 98:2 | 16500 | 1.39 | - | - | - | 70.5 | 105.5 | 7 | 80°C | 100 | 95 | 3 | 2-3 |
| Ex. 11 | C18URA | StA | 64:36 | 18200 | 1.18 | - | - | - | 72.3 | 109.4 | 7 | 80°C | 100- | 95 | 3 | 2 |
| Ex. 12 | C18URA | StA | 50:50 | 24500 | 1.3 | - | - | - | 70.2 | 109.6 | 7 | 80°C | 100- | 90+ | 3 | 2 |
| Com. Ex. 3 | C18URA | HEA | 50:50 | 33100 | 1.6 | 37.8 | 13 | No | 54.2 | 103.2 | 85 | 120°C | 50 | 70+ | 1 | 1 |
| Com. Ex. 4 | C18URA | tBuA | 50:50 | 36900 | 1.86 | 41.3 | 10 | 80°C | 46.9 | 107.4 | 25 | 120°C | - | - | - | - |
| Com. Ex. 5 | C18URA | AA | 50:50 | 36300 | 1.88 | 39.9 | 5 | 80°C | 53.9 | 106.9 | 16 | 80°C | 80+ | 90- | - | - |
| Com. Ex. 6 | C18URA | StA | 50:50 | 24000 | 1.23 | - | - | - | 59.8 | 95.2 | >85 | 120°C | 95 | 90- | 2 | 1 |
| Ex. 13 | C18URA/HEA/StA | | 33:45:22 | 21100 | 1.41 | - | - | - | 73.7 | 111.7 | 10 | 80°C | 90- | 90- | - | - |
| Ex. 14 | StA | diA | 100:1 | 31000 | 1.40 | 42.9 | - | No | 51.9 | 111.3 | 13.3 | No | 80 | 80- | - | - |
| Ex. 15 | C18URA | diA | 100:1 | 26000 | 1.40 | 42.6 | 7 | No | 73.1 | 110 | 13.7 | No | 95 | 90- | - | - |

### <Example 18> StA/HEA

The reaction was conducted in the same manner as in Example 11 to provide a block copolymer (18) except that 80 molar equivalents of StA as the first monomer and 20 molar equivalents of HEA as the second monomer were used per molar equivalent of cyanomethyl dodecyltrithiocarbonate as the RAFT initiator.

### <Example 19> StA/(HBA/HBAGE)

The reaction was conducted in the same manner as in Example 11 to provide a block copolymer (19) except that 80 molar equivalents of StA as the first monomer and two types of monomers: 10 molar equivalents of hydroxybutyl acrylate (HBA) and 10 molar equivalents of hydroxybutyl acrylate glycidyl ether (HBAGE) as the second monomer were simultaneously added per molar equivalent of cyanomethyl dodecyltrithiocarbonate as the RAFT initiator. In water-repellency test of the block copolymer (19), even fabric washed 20 times after coating scored 95 points (PET) and 95- points (Ny), and the water-repellent performance was maintained also after washing.

### <Comparative Example 7> StA/HEA

The reaction was conducted in the same manner as in Example 11 to provide a random copolymer (7) except that 80 molar equivalents of StA as the first monomer and 20 molar equivalents of HEA as the second monomer were used per molar equivalent of cyanomethyl dodecyltrithiocarbonate as the RAFT initiator and the first monomer and the second monomer were simultaneously added to the reaction vessel.

### <Comparative Example 8> StA/GMA/HEA

In a reaction vessel purged with nitrogen, 4.0 ml of toluene, 18.3 mg of AIBN, and 2.2 g of StA, 0.39 g of HEA, and 0.16 g of glycidyl methacrylate (GMA) as monomers were added, and a reaction was conducted by heating at 65°C under stirring. After consumption of unreacted monomers was confirmed by ¹H NMR measurement, reprecipitation in acetone provided a random copolymer (8). The reaction quantitatively proceeded.

### <Example 20> C18AmEA/HEA

The reaction was conducted in the same manner as in Example 11 to provide a block copolymer (20) except that 40 molar equivalents of CH₂=CHCO₂-CH₂CH₂-NH-C(=O)-C₁₇H₃₅ (C18AmEA) as the first monomer and 60 molar equivalents of HEA as the second monomer were used per molar equivalent of cyanomethyl dodecyltrithiocarbonate as the RAFT initiator.

### <Example 21> C18AmEA/HEA

The reaction was conducted in the same manner as in Example 11 to provide a block copolymer (21) except that 50 molar equivalents of C18AmEA as the first monomer and 50 molar equivalents of HEA as the second monomer were used per molar equivalent of cyanomethyl dodecyltrithiocarbonate as the RAFT initiator.

### <Example 22> C18AmEA/HEA

The reaction was conducted in the same manner as in Example 11 to provide a block copolymer (22) except that 100 molar equivalents of C18AmEA as the first monomer and 100 molar equivalents of HEA as the second monomer were used per molar equivalent of cyanomethyl dodecyltrithiocarbonate as the RAFT initiator.

### <Example 23> C18AmEA/HEA

The reaction was conducted in the same manner as in Example 2 to provide a block copolymer (23) except that 69 molar equivalents of C18AmEA as the first monomer and 31 molar equivalents of HEA as the second monomer were used per molar equivalent of ethyl 2-bromoisobutyrate as the initiator.

### <Example 24> C18AmEA/(StA/HEA)

The reaction was conducted in the same manner as in Example 11 to provide a block copolymer (24) except that 30 molar equivalents of C18AmEA as the first monomer and two types of monomers: 40 molar equivalents of StA and 30 molar equivalents of HEA as the second monomer were simultaneously added per molar equivalent of cyanomethyl dodecyltrithiocarbonate as the RAFT initiator.

### <Example 25> C18AmEA/(GMA/HEA)

The reaction was conducted in the same manner as in Example 11 to provide a block copolymer (25) except that 70 molar equivalents of C18AmEA as the first monomer and two types of monomers: 6 molar equivalents of GMA and 24 molar equivalents of HEA as the second monomer were simultaneously added per molar equivalent of cyanomethyl dodecyltrithiocarbonate as the RAFT initiator.

### <Example 26> C18AmEA/tBuA

The reaction was conducted in the same manner as in Example 2 to provide a block copolymer (26) except that 60 molar equivalents of C18AmEA as the first monomer and 40 molar equivalents of tBuA as the second monomer were used per molar equivalent of ethyl 2-bromoisobutyrate as the initiator.

### <Example 27> C18AmEA/tBuA

The reaction was conducted in the same manner as in Example 2 to provide a block copolymer (27) except that 47 molar equivalents of C18AmEA as the first monomer and 53 molar equivalents of tBuA as the second monomer were used per molar equivalent of ethyl 2-bromoisobutyrate as the initiator.

### <Example 28> C18AmEA/AA

A deprotection reaction was conducted by causing 5 equivalents of trifluoroacetic acid to react per unit of tBuA of the block copolymer (26), and reprecipitation in acetone provided a block copolymer (28).

### <Example 29> C18AmEA/StA

The reaction was conducted in the same manner as in Example 11 to provide a block copolymer (29) except that 30 molar equivalents of C18AmEA as the first monomer and 70 molar equivalents of StA as the second monomer were used per molar equivalent of cyanomethyl dodecyltrithiocarbonate as the RAFT initiator.

### <Example 30> C18AmEA/StA

The reaction was conducted in the same manner as in Example 11 to provide a block copolymer (30) except that 50 molar equivalents of C18AmEA as the first monomer and 50 molar equivalents of StA as the second monomer were used per molar equivalent of cyanomethyl dodecyltrithiocarbonate as the RAFT initiator.

### <Comparative Example 9> C18AmEA/HEA

The reaction was conducted in the same manner as in Example 11 to provide a block copolymer (9) except that 10 molar equivalents of C18AmEA as the first monomer and 90 molar equivalents of HEA as the second monomer were used per molar equivalent of cyanomethyl dodecyltrithiocarbonate as the RAFT initiator.

### <Comparative Example 10> C18AmEA/HEA

The reaction was conducted in the same manner as in Example 11 to provide a block copolymer (10) except that 20 molar equivalents of C18AmEA as the first monomer and 80 molar equivalents of HEA as the second monomer were used per molar equivalent of cyanomethyl dodecyltrithiocarbonate as the RAFT initiator.

### <Comparative Example 11> C18AmEA/HEA

The reaction was conducted in the same manner as in Example 2 to provide a random copolymer (11) except that 46 molar equivalents of C18AmEA as the first monomer and 54 molar equivalents of HEA as the second monomer were used per molar equivalent of ethyl 2-bromoisobutyrate as the initiator and the first monomer and the second monomer were simultaneously added to the reaction vessel.

### <Comparative Example 12> C18AmEA/HEA

The reaction was conducted in the same manner as in Comparative Example (8) to provide a random copolymer (12) except that 50 molar equivalents of C18AmEA and 50 molar equivalents of HEA were used as monomers per molar equivalent of AIBN as the initiator. The obtained polymer had low solubility in chloroform and toluene, and thus it was difficult to produce uniform coating films for contact angle and fabric evaluation.

### <Comparative Example 13> C18AmEA/HEA

The reaction was conducted in the same manner as in Comparative Example (8) to provide a random copolymer (13) except that 70 molar equivalents of C18AmEA and 30 molar equivalents of HEA were used as monomers per molar equivalent of AIBN as the initiator. The obtained polymer had low solubility in chloroform or toluene, and thus it was difficult to produce uniform coating films for contact angle and fabric evaluation.

### <Comparative Example 14> C18AmEA/HEA

The reaction was conducted in the same manner as in Comparative Example (8) to provide a random copolymer (14) except that 80 molar equivalents of C18AmEA and 20 molar equivalents of HEA were used as monomers per molar equivalent of AIBN as the initiator. The obtained polymer had low solubility in chloroform and toluene, and thus it was difficult to produce uniform coating films for contact angle and fabric evaluation.

### <Comparative Example 15> StA/GMA/HEA

The reaction was conducted in the same manner as in Comparative Example (8) to provide a random copolymer (15) except that 60 molar equivalents of StA, 10 molar equivalents of GMA, and 30 molar equivalents of HEA were used as monomers per molar equivalent of AIBN as the initiator.

### <Comparative Example 16> C18AmEA/GMA/HEA

The reaction was conducted in the same manner as in Example 11 to provide a random copolymer (16) except that 60 molar equivalents of C18AmEA as the first monomer, 10 equivalents of GMA as the second monomer, and 30 molar equivalents of HEA as a third monomer were used per molar equivalent of cyanomethyl dodecyltrithiocarbonate as the RAFT initiator and the first monomer, the second monomer, and the third monomer were simultaneously added to the reaction vessel.

### <Comparative Example 17> C18AmEA/tBuA

The reaction was conducted in the same manner as in Example 2 to provide a random copolymer (17) except that 53 molar equivalents of C18AmEA as the first monomer and 47 molar equivalents of tBuA as the second monomer were used per molar equivalent of ethyl 2-bromoisobutyrate as the initiator and the first monomer and the second monomer were simultaneously added to the reaction vessel.

### <Comparative Example 18> C18AmEA/AA

A deprotection reaction was conducted by causing 5 equivalents of trifluoroacetic acid to react per unit of tBuA of the random copolymer (17), and reprecipitation in acetone provided a random copolymer (18).

### <Comparative Example 19> C18AmEA/StA

The reaction was conducted in the same manner as in Example 11 to provide a random copolymer (19) except that 30 molar equivalents of C18AmEA as the first monomer and 70 molar equivalents of HEA as the second monomer were used per molar equivalent of cyanomethyl dodecyltrithiocarbonate as the RAFT initiator and the first monomer and the second monomer were simultaneously added to the reaction vessel.

### <Example 31> C18AmEA/HEA/diA

The reaction was conducted in the same manner as in Example 11 to provide a block copolymer (31) except that 100 molar equivalents of C18AmEA as the first monomer, 1 molar equivalent of HEA as the second monomer, and 1 molar equivalent of CH₂=CHCO₂-C₆H₁₂-CO₂CH=CH₂ (diA) as a third monomer were used per molar equivalent of cyanomethyl dodecyltrithiocarbonate as the RAFT initiator and the third monomer was added after consumption of the second monomer was confirmed.

### <Example 32> C18AmEA/tBuA/diA

The reaction was conducted in the same manner as in Example 11 to provide a block copolymer (32) except that 100 molar equivalents of C18AmEA as the first monomer, 1 molar equivalent of tBuA as the second monomer, and 1 molar equivalent of diA as a third monomer were used per molar equivalent of cyanomethyl dodecyltrithiocarbonate as the RAFT initiator and the third monomer was added after consumption of the second monomer was confirmed.

### <Example 33> C18AmEA/AA/diA

A deprotection reaction was conducted by causing 5 equivalents of trifluoroacetic acid to react per unit of tBuA of the block copolymer (32), and reprecipitation in acetone provided a block copolymer (33).

### <Example 34> C18AmEA/HEA/diA

The reaction was conducted in the same manner as in Example 11 to provide a block copolymer (34) except that 38 molar equivalents of C18AmEA as the first monomer, 51 molar equivalents of HEA as the second monomer, and 11 molar equivalents of StA as a third monomer were used per molar equivalent of cyanomethyl dodecyltrithiocarbonate as the RAFT initiator and the third monomer was added after the consumption of the second monomer was confirmed.

### <Example 35> C18AmEA/diA

The reaction was conducted in the same manner as in Example 11 to provide a block copolymer (35) except that 100 molar equivalents of C18AmEA as the first monomer and 1 molar equivalent of diA as the second monomer were used per molar equivalent of cyanomethyl dodecyltrithiocarbonate as the RAFT initiator.

### <Example 36> C18AmEA/HEA

The reaction was conducted in the same manner as in Example 16 to provide a block copolymer (36) except that 50 molar equivalents of C18AmEA as the first monomer and 5 molar equivalents of HEA as the second monomer were used per molar equivalent of 2-[(dodecylsulfanylthio-carbonyl)sulfanyl]propanoic acid as the RAFT initiator.

### <Example 37> (C18AmEA/StA)/HEA

The reaction was conducted in the same manner as in Example 11 to provide a block copolymer (37) except that 40 molar equivalents of C18AmEA and 40 molar equivalents of StA as the first monomer and 20 molar equivalents of HEA as the second monomer were used per molar equivalent of cyanomethyl dodecyltrithiocarbonate as the RAFT initiator. In water-repellency test of the block copolymer (37), even fabric washed 20 times after coating scored 95 points (PET) and 95+ points (Ny), and the water-repellent performance was maintained also after washing.

The number-average molecule weight (Mn), weight-average molecular weight (Mw), molecular weight distribution (Mw/Mn), copolymer compositional features, melting point, static and dynamic contact angles, and water-repellency test and strong water-repellency test results of Examples 16 to 37 and Comparative Examples 7 to 19 are shown in Table 2.

**[Table 2]**

| | First monomer | Second monomer | Copolymer ingredients and Molecular weight | | | Hexadecane contact angle | | | Melting point Tm | Water contact angle | | | Water repellency test | | Strong water repellency test | |
|---|---|---|---|---|---|---|---|---|---|---|---|---|---|---|---|---|
| | | | mol% | Mw | Mw/Mn | Static [°] | Dynamic [°] | Anneal temperature [°C] | °C | Static [°] | Dynamic [°] | Anneal temperature [°C] | PET | Ny | PET | Ny |
| Ex. 16 | StA | tBuA | 64:36 | 14300 | 1.15 | - | - | - | 46.1 | 110.4 | 8 | 120°C | - | - | - | - |
| Ex. 17 | StA | HEA | 91:9 | 14800 | 1.17 | - | - | - | 49.6 | - | 11 | 120°C | - | - | - | - |
| Ex. 18 | StA | HEA | 80:20 | 20600 | 1.24 | - | - | - | 49.7 | 109.2 | 10 | 120°C | 80+ | 90- | 2 | 2 |
| Ex. 19 | StA | HBA/HBAGE | 80:10:10 | 29300 | 1.44 | - | - | - | 49.2 | 110.4 | 7 | 120°C | 90+ | 90 | 2-3 | 2-3 |
| Com. Ex. 7 | StA | HEA | 80:20 | 23200 | 1.23 | - | - | - | 48.8 | - | - | - | 90 | 90- | 2 | 2 |
| Com. Ex. 8 | StA/GMA/HEA | | 60:10:30 | 183200 | 4.30 | - | - | - | 48.3 | 109.3 | 23 | No | - | - | - | - |
| Ex. 20 | C18AmEA | HEA | 40:60 | 17400 | 1.23 | - | - | - | 90.1 | - | - | - | 80 | 90- | - | - |
| Ex. 21 | C18AmEA | HEA | 50:50 | 16100 | 1.20 | - | - | - | 90.0 | 108.5 | 13 | 120°C | 90+ | 90 | 2 | 2 |
| Ex. 22 | C18AmEA | HEA | 50:50 | 22700 | 1.29 | - | - | - | 91.1 | - | - | - | 80- | 90- | - | - |
| Ex. 23 | C18AmEA | HEA | 69:31 | 11500 | 1.23 | 43.5 | 4 | 120- | 91.5 | 110.6 | 10 | 120°C | 90+- 100- | 100- | 3 | 3 |
| Ex. 24 | C18AmEA | StA/HEA | 30:40:30 | 28000 | 1.30 | - | - | - | 86.2 | 108.3 | 19 | 120°C | 95 | 95 | 2 | 2 |
| Ex. 25 | C18AmEA | GMA/HEA | 70:6:24 | 141700 | 2.87 | - | - | - | 90.3 | 109.5 | 15 | 120°C | 95 | 95 | 2-3 | 2-3 |
| Ex. 26 | C18AmEA | tBuA | 60:40 | 10900 | 1.33 | 43.4 | 7 | 120°C | 91.4 | 110.7 | 11 | 120°C | - | - | - | - |
| Ex. 27 | C18AmEA | tBuA | 47:53 | 9633 | 1.22 | - | - | - | 92.6 | - | - | - | - | - | - | - |
| Ex. 28 | C18AmEA | AA | 60:40 | 13600 | 1.26 | - | - | - | 82.7 | 110.2 | 10 | 120°C | 95 | 100- | 2 | 2-3 |
| Ex. 29 | C18AmEA | StA | 30:70 | 23700 | 1.29 | - | - | - | 85.2 | 110.5 | 12 | 80°C | 95 | 100- | 2 | 2-3 |
| Ex. 30 | C18AmEA | StA | 50:50 | 22300 | 1.25 | - | - | - | 90.1 | 110.4 | 11 | 80°C | 95 | 95 | 2 | 2-3 |
| Com. Ex. 9 | C18AmEA | HEA | 10:90 | 14800 | 1.21 | - | - | - | 90.8 | 109.2 | >85 | 120°C | 0 | 0 | 1 | 1 |
| Com. Ex. 10 | C18AmEA | HEA | 20:80 | 19100 | 1.30 | - | - | - | 92.7 | 111.2 | >85 | 120°C | 50- | 50- | 1 | 1 |
| Com. Ex. 11 | C18AmEA | HEA | 46:54 | 19700 | 1.43 | 38.6 | 9 | No | 57.4 | 105.4 | 39 | 80°C | 50+ | 50+ | 1 | 1 |
| Com. Ex. 12 | C18AmEA | HEA | 50:50 | 71100* | 2.54 | - | - | - | 61.3 | Unmeasurable because uniform coating was failed | | | *Unmeasurable because uniform coating on fabric was failed | | | |
| Com. Ex. 13 | C18AmEA | HEA | 70:30 | 78500* | 2.14 | - | - | - | 73.0 | Unmeasurable because uniform coating was failed | | | *Unmeasurable because uniform coating on fabric was failed | | | |
| Com. Ex. 14 | C18AmEA | HEA | 80:20 | 35200* | 1.74 | - | - | - | 82.6 | Unmeasurable because uniform coating was failed | | | *Unmeasurable because uniform coating on fabric was failed | | | |
| Com. Ex. 15 | StA/GMA/HEA | | 60:10:30 | Mn78800 | 26.7 | - | - | - | 56.2 | 108.3 | 50 | 120°C | - | - | - | - |
| Com. Ex. 16 | C18AmEA/GMA/HEA | | 60:10:30 | 78500 | 3.34 | - | - | - | 71.3 | 106.4 | - | No | - | - | - | - |
| Com. Ex. 17 | C18AmEA | tBuA | 53:47 | 16400 | 1.31 | 36.8 | 7 | No | 62.5 | 104.6 | >85 | No | - | - | - | - |
| Com. Ex. 18 | C18AmEA | AA | 53:47 | 17200 | 1.24 | - | - | - | 60.7 | 102.0 | 56 | 120°C | - | - | 1 | 1 |
| Com. Ex. 19 | C18AmEA | StA | 30:70 | 22300 | 1.28 | - | - | - | 65.3 | - | - | - | - | - | 2-3 | 1 |
| Ex. 31 | C18AmEA/HEA/diA | | 100:1:1 | 13200 | 1.38 | - | - | - | 93.6 | 110.6 | 11 | 120°C | 100- | 70- | 2-3 | - |
| Ex. 32 | C18AmEA/tBuA/diA | | 100:1:1 | 12600 | 1.33 | - | - | - | 93.7 | 110.5 | 11 | 120°C | 100- | 80+ | 2-3 | - |
| Ex. 33 | C18AmEA/AA/diA | | 100:1:1 | 20500 | 1.31 | - | - | - | 91.2 | 110.2 | 7 | 120°C | 90- | - | - | - |
| Ex. 34 | C18AmEA/HEA/StA | | 38:51:11 | 19100 | 1.32 | - | - | - | 90.3 | - | - | - | 90+ | 90- | - | - |
| Ex. 35 | C18AmEA | diA | 100:1 | 11000 | 1.77 | 42.9 | 5.3 | No | 97.1 | 110.2 | 7 | 120°C | 90 | - | - | - |
| Ex. 36 | C18AmEA | HEA | 77:23 | 10800 | 1.15 | - | - | - | 91.4 | 109.1 | 10 | 120°C | - | - | - | - |
| Ex. 37 | C18AmEA/StA | HEA | 40:40:20 | 38000 | 1.54 | - | - | - | 70.9 | 110.3 | 11 | 120°C | 100- | 95 | 3 | 2-3 |

### Industrial Applicability

The surface treatment agent of the present disclosure can be used as a water- and oil-repellent agent or a soil resistant agent. The surface treatment agent can be suitably used for substrates such as textile products and masonry and imparts excellent water- and oil-repellency to substrates.

## Claims

1. A fluorine-free block copolymer comprising (A) at least one block segment,
wherein the block segment (A) has a repeating unit formed from one or at least two acrylic monomers having a long-chain hydrocarbon group having 7 to 40 carbon atoms.

2. The fluorine-free block copolymer according to claim 1, wherein
the fluorine-free block copolymer has (B) a segment which is different from the block segment (A),
wherein the segment (B) has at least one of:
(B1) a block segment having a repeating unit formed from an acrylic monomer having a long-chain hydrocarbon group having 7 to 40 carbon atoms, which is different from the segment (A);
(B2) a block segment having a repeating unit formed from an acrylic monomer free from long-chain hydrocarbon group; and
(B3) a random segment formed from at least two acrylic monomers.

3. The fluorine-free block copolymer according to claim 1 or 2, wherein
the acrylic monomer having a long-chain hydrocarbon group is a monomer represented by the formula:
CH₂=C(-R¹²)-C(=O)-Y¹¹-(R¹¹)ₖ
wherein R¹¹ is a hydrocarbon group having 7 to 40 carbon atoms,
R¹² is a hydrogen atom, a monovalent organic group, or a halogen atom exclusive of a fluorine atom,
Y¹¹ is a group comprised of at least one selected from a divalent to tetravalent hydrocarbon group having 1 carbon atom, -C₆H₄-, -O-, -C(=O)-, -S(=O)₂-, and -NH-(excluding a hydrocarbon group alone), and
k is 1 to 3.

4. The fluorine-free block copolymer according to claim 3, wherein
in the acrylic monomer having a long-chain hydrocarbon group,
Y¹¹ is -Y'-, -Y'-Y'-, -Y'-C(=O)-, -C(=O)-Y'-, -Y'-C(=O)-Y'-, -Y'-R'-, -Y'-R'-Y'-, -Y'-R'-Y'-C(=O)-, -Y'-R'-C(=O)-Y'-, -Y'-R'-Y'-C(=O)-Y'-, or -Y'-R'-Y'-R'-
wherein each Y' is independently a direct bond, -O-, -NH- or -S(=O)₂-, and
each R' is independently -(CH₂)ₘ-, where m is an integer of 1 to 5, a linear hydrocarbon group having 1 to 5 carbon atoms having an unsaturated bond, a hydrocarbon group having 1 to 5 carbon atoms having a branched structure, or -(CH₂)ₗ-C₆H₄-(CH₂)ₗ-, where each 1 is independently an integer of 0 to 5, and -C₆H₄- is a phenylene group.

5. The fluorine-free block copolymer according to claim 3 wherein
in the acrylic monomer having a long-chain hydrocarbon group,
Y¹¹ is -O-, -NH-, -O-C(=O)-, -NH-C(=O) -, -O-C(=O)-NH-, -NH-C(=O)-O-, -NH-C(=O)-NH-, -O-C₆H₄-, -NH-C₆H₄-, -O-(CH₂)ₘ-O-, -NH-(CH₂)ₘ-NH-, -O-(CH₂)ₘ-NH-, -NH-(CH₂)ₘ-O-,-O-(CH₂)ₘ-O-C(=O)-, -O-(CH₂)ₘ-C(=O)-O-, -NH-(CH₂)ₘ-O-C(=O)-, -NH-(CH₂)ₘ-C(=O)-O-, -O-(CH₂)ₘ-O-C(=O)-NH-, -O-(CH₂)ₘ-NH-C(=O)-O-, -O-(CH₂)ₘ-C(=O)-NH-, -O-(CH₂) ₘ-NH-C(=O)-, -O-(CH₂)ₘ-NH-C(=O)-NH-, -O-(CH₂)ₘ-O-C₆H₄-, -O-(CH₂)ₘ-NH-S(=O)₂-, -O-(CH₂)ₘ-S(=O)₂-NH-, -NH-(CH₂)ₘ-O-C(=O)-NH-, -NH-(CH₂)ₘ-NH-C(=O)-O-, -NH-(CH₂)ₘ-C(=O)-NH-, -NH-(CH₂)ₘ-NH-C(=O)-, -NH-(CH₂)ₘ-NH-C(=O)-NH-, -NH-(CH₂)ₘ-O-C₆H₄-, -NH-(CH₂)ₘ-NH-C₆H₄-, -NH-(CH₂)ₘ-NH-S(=O)₂-, or -NH-(CH₂)ₘ-S(=O)₂-NH-
wherein m is an integer of 1 to 5.

6. The fluorine-free block copolymer according to any one of claims 1 to 5, wherein
the acrylic monomer having a long-chain hydrocarbon group is at least one monomer selected from the group consisting of:
(a1) a compound represented by the formula:
CH₂=C(-R²²)-C(=O)-Y²¹-R²¹
wherein R²¹ is a hydrocarbon group having 7 to 40 carbon atoms,
R²² is a hydrogen atom, a monovalent organic group, or a halogen atom exclusive of a fluorine atom, and
Y²¹ is -O- or -NH-, and
(a2) a compound represented by the formula:
CH₂=C(-R³²)-C(=O)-Y³¹-Z³¹(-Y³²-R³¹)ₙ
wherein R³¹ is a hydrocarbon group having 7 to 40 carbon atoms,
R³² is a hydrogen atom, a monovalent organic group, or a halogen atom exclusive of a fluorine atom,
Y³¹ is -O- or -NH-,
Y³² is a group comprised of at least one selected from -C₆H₄-, -O-, -C(=O)-, -S(=O)₂-, and -NH-,
Z³¹ is a divalent or trivalent hydrocarbon group having 1 to 5 carbon atoms, and
n is 1 or 2.

7. The fluorine-free block copolymer according to claim 6, wherein
in the acrylic monomer (a1),
R²² is a hydrogen atom, a methyl group, or a chlorine atom, and
in the acrylic monomer (a2),
R³² is a hydrogen atom, a methyl group, or a chlorine atom, and
Y³² is a direct bond, -O-, -NH-, -O-C(=O)-, -C(=O)-O-, -C(=O)-NH-, -NH-C(=O)-, -NH-S(=O)₂-, -S(=O)₂-NH-, -O-C(=O)-NH-, -NH-C(=O)-O-, -NH-C(=O)-NH-, -O-C₆H₄-, -NH-C₆H₄-, -O-(CH₂)ₘ-O-, -NH-(CH₂)ₘ-NH-, -O-(CH₂)ₘ-NH-, -NH-(CH₂)ₘ-O-, -O-(CH₂) ₘ-O-C(=O)-, -O-(CH₂)ₘ-C(=O)-O-, -NH-(CH₂)ₘ-O-C(=O)-, -NH-(CH₂)ₘ-C(=O)-O-, -O-(CH₂)ₘ-O-C(=O)-NH-, -O-(CH₂)ₘ-NH-C(=O)-O-, -O-(CH₂)ₘ-C(=O)-NH-, -O-(CH₂)ₘ-NH-C(=O)-, -O-(CH₂)ₘ-NH-C(=O)-NH-, -O-(CH₂)ₘ-O-C₆H₄-, -NH-(CH₂)ₘ-O-C(=O)-NH-, -NH-(CH₂)ₘ-NH-C(=O)-O-, -NH-(CH₂)ₘ-C(=O)-NH-, -NH-(CH₂)ₘ-NH-C(=O)-, -NH-(CH₂)ₘ-NH-C(=O)-NH-, -NH-(CH₂)ₘ-O-C₆H₄-, or -NH-(CH₂)ₘ-NH-C₆H₄-
wherein m is an integer of 1 to 5, and
Z³¹ is -CH₂-, -CH₂CH₂-, -CH₂CH₂CH₂-, -CH₂CH₂CH₂CH₂-,-CH₂CH₂CH₂CH₂CH₂-, -CH₂CH= having a branched structure,-CH₂(CH-)CH₂- having a branched structure, -CH₂CH₂CH= having a branched structure, -CH₂CH₂CH₂CH₂CH= having a branched structure, -CH₂CH₂(CH-)CH₂- having a branched structure, or -CH₂CH₂CH₂CH= having a branched structure.

8. The fluorine-free block copolymer according to any one of claims 1 to 7, wherein, in the acrylic monomer having a long-chain hydrocarbon group, the long-chain hydrocarbon group is a linear or branched alkyl group having 10 to 40 carbon atoms, the acrylic monomer free from long-chain hydrocarbon group is an acrylic monomer having a short-chain hydrocarbon group having 1 to 6 carbon atoms, an acrylic monomer having a dimethylsiloxane portion in a side chain, an acrylic monomer having a hydrophilic group, an acrylic monomer having a cyclic hydrocarbon group, an acrylic monomer having a crosslinking portion, or a halogenated olefin, and the hydrophilic group is an OH group, an NH₂ group, a COOH group, a sulfone group or a phosphoric acid group, or an alkali metal or alkaline earth metal salt group of a carboxylic acid.

9. The fluorine-free block copolymer according to claim 8, wherein,
the acrylic monomer having a short-chain hydrocarbon group having 1 to 6 carbon atoms is a compound represented by the formula:
CH₂=C(-R⁵²)-C(=O)-Y⁵¹-R⁵¹
wherein R⁵¹ is a hydrocarbon group having 1 to 6 carbon atoms, optionally comprising an oxygen atom,
R⁵² is a hydrogen atom, a monovalent organic group, or a halogen atom exclusive of a fluorine atom, and
Y⁵¹ is -O- or -NH-, and
the acrylic monomer having a hydrophilic group is a compound represented by the formula:
CH₂=C(-R⁶²)-C(=O)-Y⁶¹⁻R⁶¹-(-Y⁶²)_{q}
wherein R⁶¹ is a hydrocarbon group having 1 to 6 carbon atoms or a single bond,
R⁶² is a hydrogen atom, a monovalent organic group, or a halogen atom exclusive of a fluorine atom,
Y⁶¹ is -O- or -NH-,
Y⁶² is a hydrophilic group, and
q is a number of 1 to 3.

10. The fluorine-free block copolymer according to any one of claims 1 to 9, wherein a molar ratio of the block segment (A) (molar ratio of the repeating unit) is 30 mol% or more, based on the repeating units of the copolymer.

11. A method for producing the fluorine-free block copolymer according to any one of claims 1 to 10, which comprises:
a first polymerization step of polymerizing one of an acrylic monomer having a long-chain hydrocarbon group or an acrylic monomer free from long-chain hydrocarbon group in a first stage, and then,
a second polymerization step of polymerizing the other of the acrylic monomer having a long-chain hydrocarbon group or the acrylic monomer free from long-chain hydrocarbon group in a second stage, to produce the fluorine-free block copolymer.

12. A surface treatment agent comprising:
(1) the fluorine-free block copolymer according to any one of claims 1 to 10, and
(2) a liquid medium which is an organic solvent, water, or a mixture of water and an organic solvent.

13. The surface treatment agent according to claim 12, being a water-repellent agent.

14. A substrate comprising the fluorine-free block copolymer in the surface treatment agent according to claim 12 or 13 adhering to the substrate.

15. A method for producing a treated substrate, comprising applying the surface treatment agent according to claim 12 or 13 to the substrate.
